(19) Europäisches Patentamt / European Patent Office / Office européen des brevets

(11) **EP 4 614 979 A1**

(12) **EUROPEAN PATENT APPLICATION**
published in accordance with Art. 153(4) EPC

(43) Date of publication:
**10.09.2025 Bulletin 2025/37**

(21) Application number: 23886403.7

(22) Date of filing: **06.11.2023**

(51) International Patent Classification (IPC):
**H04N 19/70** (2014.01)     **H04N 19/105** (2014.01)
**H04N 19/513** (2014.01)     **H04N 19/132** (2014.01)

(52) Cooperative Patent Classification (CPC):
**H04N 19/105; H04N 19/132; H04N 19/513;
H04N 19/70**

(86) International application number:
**PCT/KR2023/017615**

(87) International publication number:
**WO 2024/096709 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 06.11.2022  US 202263423033 P
10.11.2022  KR 20220149782

(71) Applicant: **LG Electronics Inc.
Yeongdeungpo-gu
Seoul 07336 (KR)**

(72) Inventor: **JANG, Hyeong Moon
Seoul 06772 (KR)**

(74) Representative: **Maikowski & Ninnemann
Patentanwälte Partnerschaft mbB
Postfach 15 09 20
10671 Berlin (DE)**

(54) **IMAGE ENCODING/DECODING METHOD BASED ON AMVPMERGE MODE, METHOD FOR TRANSMITTING BITSTREAM, AND RECORDING MEDIUM ON WHICH BITSTREAM IS STORED**

(57)     An image encoding/decoding method and device are provided. The image decoding method according to the present disclosure comprises the steps of: constructing a reference picture list for the current block; rearranging the reference picture list on the basis of whether a prediction mode of the current block is an amvpMerge mode, the amvpMerge mode being a prediction mode in which an advanced motion vector prediction (AMVP) mode is applied to a first prediction direction of the current block and a merge mode is applied to a second prediction direction; and generating a prediction sample of the current block on the basis of the reference picture list, wherein template matching-based rearrangement cannot be applied to the reference picture list on the basis that the prediction mode of the current block is the amvpMerge mode.

FIG. 24

Start

Configure reference picture list — S2410

Reorder reference picture list based on whether prediction mode of current block is amvpMerge mode — S2420

Generate prediction sample of current block based on reference picture list (Inter prediction) — S2430

End

**Description**

[Technical Field]

The present disclosure relates to a method for encoding/decoding an image, a method for transmitting a bitstream and a recording medium for storing a bitstream, and more specifically, relates to an image encoding/decoding method and device based on an amvpMerge mode, a method for transmitting a bitstream generated by an image encoding method/device of the present disclosure, and a recording medium for storing the same.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.
Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.
In addition, the present disclosure is to provide an image encoding/decoding method and device based on an amvpMerge mode.
In addition, the present disclosure is to provide an image encoding/decoding method and device based on a reference picture list reordered according to whether to apply an amvpMerge mode.
In addition, the present disclosure is to provide a non-transitory computer-readable recording medium for storing a bitstream generated by the image encoding method or device according to the present disclosure.
In addition, the present disclosure is to provide a non-transitory computer-readable recording medium for storing a bitstream which is received and decoded by the image decoding apparatus according to the present disclosure and used for image reconstruction.
In addition, the present disclosure is to provide a method for transmitting a bitstream which is generated by the image encoding method or device according to the present disclosure.
The technical problems to be achieved in the present disclosure are not limited to the technical problems described above, and other technical problems not described may be clearly understood by those of ordinary skill in the art from the following descriptions.

[Technical Solution]

An image decoding method according to an aspect of the present disclosure includes constructing a reference picture list for a current block, reordering the reference picture list based on whether a prediction mode of the current block is an amvpMerge mode, wherein the amvpMerge mode is a prediction mode in which an advanced motion vector prediction (AMVP) mode is applied for a first prediction direction of the current block and a merge mode is applied for a second prediction direction, and generating a prediction sample of the current block based on the reference picture list, wherein template matching-based reordering may not be applied to the reference picture list based on a prediction mode of the current block being an amvpMerge mode.
An image decoding method according to another aspect of the present disclosure includes a memory and at least one processor, and the at least one processor constructs a reference picture list for a current block, reorders the reference picture list based on whether a prediction mode of the current block is an amvpMerge mode, wherein the amvpMerge mode is a prediction mode in which an advanced motion vector prediction (AMVP) mode is applied for a first prediction direction of the current block and a merge mode is applied for a second prediction direction, and generates a prediction sample of the current block based on the reference picture list, wherein template matching-based reordering may not be applied to the reference picture list based on a prediction mode of the current block being an amvpMerge mode.
An image encoding method according to another aspect of the present disclosure includes constructing a reference picture list for a current block, reordering the reference picture list based on whether a prediction mode of the current block is an amvpMerge mode, wherein the amvpMerge mode is a prediction mode in which an advanced motion vector prediction (AMVP) mode is applied for a first prediction direction of the current block and a merge mode is applied for a second prediction direction, generating a prediction sample of the current block based on the reference picture list, and encoding a reference picture index representing a reference picture used to generate the prediction sample within a bitstream, wherein template matching-based reordering may not be applied to the reference picture list based on a prediction mode of the current block being an amvpMerge mode.

A computer-readable recording medium according to another aspect of the present disclosure may store a bitstream generated by the image encoding method or an image encoding device of the present disclosure.

A transmission method according to another aspect of the present disclosure may transmit a bitstream generated by the image encoding device or an image encoding method of the present disclosure.

The features briefly summarized above for the present disclosure are merely an exemplary aspect of a detailed description of the present disclosure described below, and do not limit the scope of the present disclosure.

[Advantageous Effects]

According to the present disclosure, an image encoding/decoding method and apparatus with improved encoding/decoding efficiency may be provided.

In addition, according to the present disclosure, an image encoding/decoding method and device based on an amvpMerge mode may be provided.

In addition, according to the present disclosure, an image encoding/decoding method and device based on a reference picture list reordered according to whether to apply an amvpMerge mode may be provided.

In addition, according to the present disclosure, a non-transitory computer-readable recording medium for storing a bitstream generated by the image encoding method or device according to the present disclosure may be provided.

According to the present disclosure, a non-transitory computer-readable recording medium for storing a bitstream which is received and decoded by the image decoding apparatus according to the present disclosure and used for image reconstruction may be provided.

In addition, according to the present disclosure, a method for transmitting a bitstream generated by the image encoding method or device according to the present disclosure may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 is a diagram schematically representing an inter predictor of an image encoding apparatus.

FIG. 5 is a flowchart representing a method for encoding an image based on inter prediction.

FIG. 6 is a diagram schematically representing an inter predictor of an image decoding apparatus.

FIG. 7 is a flowchart representing a method for decoding an image based on inter prediction.

FIG. 8 is a flowchart representing an inter prediction method.

FIG. 9 is a diagram for describing a DMVR process.

FIG. 10 is a diagram for describing a template matching-based encoding/decoding method.

FIG. 11 is a diagram showing a decoder operation for an amvpMerge mode according to an embodiment of the present disclosure.

FIGS. 12 and 13 are diagrams showing a specific example of a single reference picture list.

FIG. 14 is a diagram showing a decoder operation for an amvpMerge mode according to another embodiment of the present disclosure.

FIGS. 15 to 17 are diagrams showing a specific example of a reference picture list reordering process of an amvpMerge mode.

FIG. 18 is a diagram showing a mvp index parsing process according to an embodiment of the present disclosure.

FIG. 19 is a diagram showing a decoder operation according to an embodiment of the present disclosure.

FIG. 20 is a diagram showing a mvp index parsing method in an amvpMerge mode according to an embodiment of the present disclosure.

FIG. 21 is a diagram showing a method for reordering a single reference picture list based on whether to perform RPR.

FIG. 22 is a diagram showing a mvp index parsing method in an amvpMerge mode according to another embodiment of the present disclosure.

FIG. 23 is a diagram showing a mvp index parsing method in an amvpMerge mode according to another embodiment of the present disclosure.

FIG. 24 is a flowchart showing an image decoding method according to an embodiment of the present disclosure.

FIG. 25 is a flowchart showing an image encoding method according to an embodiment of the present disclosure.

FIG. 26 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an M×N block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

## Overview of the video coding system

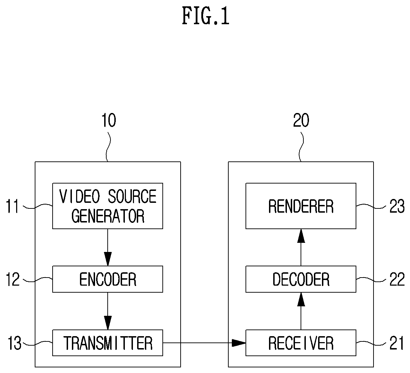

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoding apparatus 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

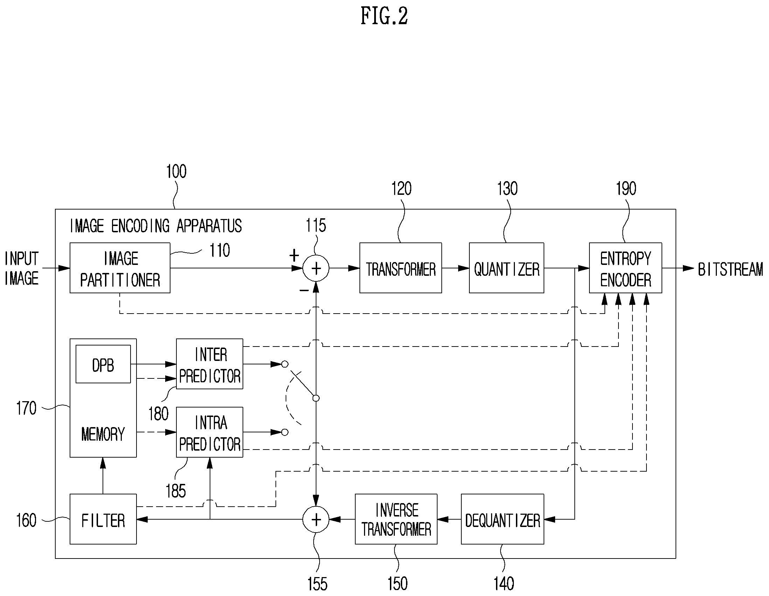

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

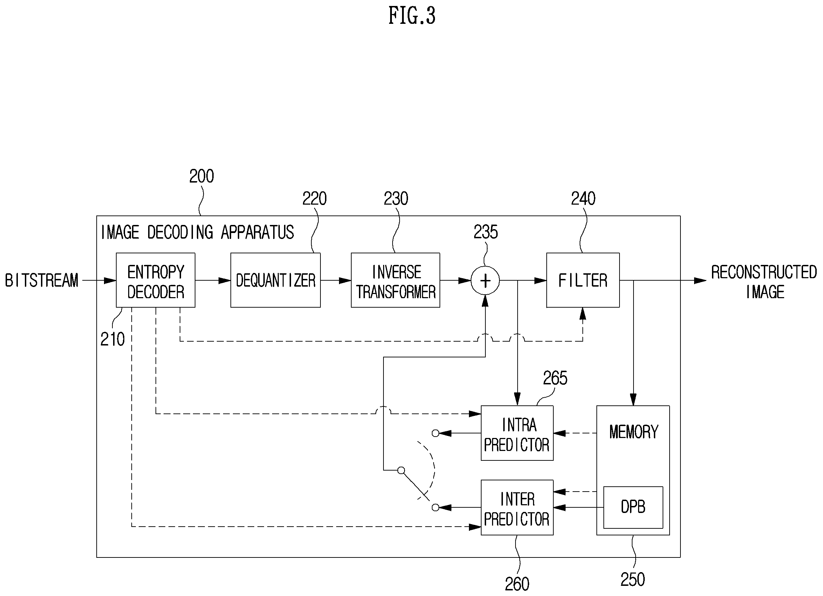

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method) .

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

## Inter Prediction

The predictor of an image encoding apparatus 100 and an image decoding apparatus 200 may perform inter prediction in a block unit to derive a prediction sample. Inter prediction may be prediction derived in a manner dependent on data elements (e.g., sample values, or motion information, etc.) of picture(s) other than a current picture. When inter prediction is applied to a current block, a predicted block (a prediction sample array) for a current block may be derived based on a reference block (a reference sample array) specified by a motion vector on a reference picture indicated by a reference picture index. In this case, in order to reduce the amount of motion information transmitted in an inter prediction mode, the motion information of a current block may be predicted in a block, sub-block or sample unit based on the correlation of motion information between a neighboring block and a current block. The motion information may include a motion vector and a reference picture index. The motion information may further include information on an inter prediction type (L0 prediction, L1 prediction, Bi prediction, etc.). When inter prediction is applied, a neighboring block may include a spatial neighboring block existing in a current picture and a temporal neighboring block existing in a reference picture. A reference picture including the reference block and a reference picture including the temporal neighboring block may be the same or different. The temporal neighboring block may be called a collocated reference block, a collocated CU (colCU), etc., and a reference picture including the temporal neighboring block may be called a collocated picture (colPic). For example, a motion information candidate list may be constructed based on neighboring blocks of a current block, and flag or index information indicating which candidate is selected (used) to derive the motion vector and/or reference picture index of the current block may be signaled. Inter prediction may be performed based on various prediction modes, and for example, in case of a skip mode and a merge mode, the motion information of a current block may be the same as the motion information of a selected neighboring block. For a skip mode, unlike a merge mode, a residual signal may not be transmitted. For a motion vector prediction (MVP) mode, the motion vector of a selected neighboring block may be used as a motion vector predictor, and a motion vector difference may be signaled. In this case, the motion vector of the current block may be derived by using the sum of the motion vector predictor and the motion vector difference.

The motion information may include L0 motion information and/or L1 motion information according to an inter prediction type (L0 prediction, L1 prediction, Bi prediction, etc.). A motion vector in a L0 direction may be called a L0 motion vector or MVL0, and a motion vector in a L1 direction may be called a L1 motion vector or MVL1. Prediction based on a L0 motion vector may be called L0 prediction, prediction based on a L1 motion vector may be called L1 prediction and prediction based on both the L0 motion vector and the L1 motion vector may be called bi-prediction. Here, a L0 motion vector may represent a motion vector associated with reference picture list L0 (L0), and a L1 motion vector may represent a motion vector associated with reference picture list L1 (L1). Reference picture list L0 may include pictures before the current picture in output order as reference pictures, and reference picture list L1 may include pictures after the current picture in output order. The previous pictures may be called a forward (reference) picture, and the subsequent pictures may be called a backward (reference) picture. The reference picture list L0 may further include pictures after the current picture in output order as reference pictures. In this case, the previous pictures may be indexed first and the subsequent pictures may be indexed next within the reference picture list L0. The reference picture list L1 may further include pictures before the current picture in output order as reference pictures. In this case, the subsequent pictures may be indexed first and the previous pictures may be indexed next within the reference picture list 1. Here, output order may correspond to picture order count (POC) order.

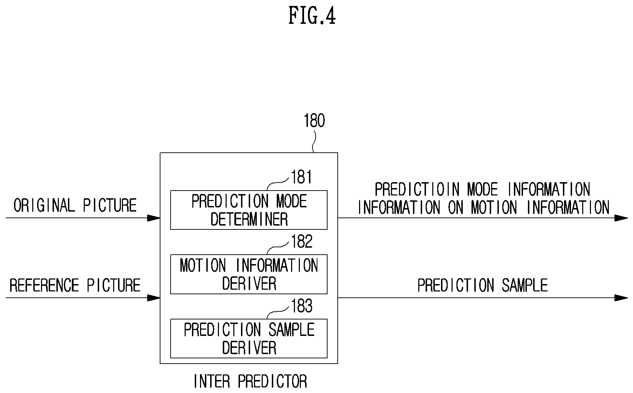

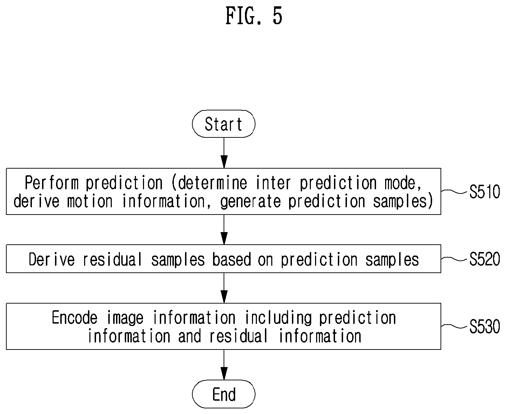

FIG. 4 is a diagram schematically representing an inter predictor 180 of an image encoding apparatus 100, and FIG. 5 is a flowchart representing a method for encoding an image based on inter prediction.

An image encoding apparatus 100 may perform inter prediction on a current block S510. An image encoding apparatus 100 may derive the inter prediction mode and motion information of a current block and generate prediction samples of the current block. Here, procedures of determining an inter prediction mode, deriving motion information and generating prediction samples may be performed simultaneously or any one procedure may be performed before other procedures. For example, the inter predictor 180 of an image encoding apparatus 100 may include a prediction mode determiner 181, a motion information deriver 182 and a prediction sample deriver 183, and may determine a prediction mode for the current block in a prediction mode determiner 181, derive motion information of the current block in a motion information deriver 182 and derive prediction samples of the current block in a prediction sample deriver 183. For example, the inter predictor 180 of an image encoding apparatus 100 may search for a block similar to the current block within a certain region (a search range) of reference pictures through motion estimation and derive a reference block whose difference from the current block is minimal or less than or equal to a certain standard. Based thereon, a reference picture index indicating a reference picture where the reference block is positioned may be derived, and a motion vector may be derived based on a positional difference between the reference block and the current block. An image encoding apparatus 100 may determine a mode applied to the current block among various prediction modes. An image encoding apparatus 100 may compare a RD cost for the various prediction modes and determine an optimal prediction mode for the current block.

For example, when a skip mode or a merge mode is applied to the current block, an image encoding apparatus 100 may construct a merge candidate list described below and derive a reference block whose difference from the current block is minimal or less than or equal to a certain standard among the reference blocks indicated by merge candidates included in the merge candidate list. In this case, a merge candidate associated with the derived reference block may be selected, and merge index information indicating the selected merge candidate may be generated and signaled to a decoding device. The motion information of the current block may be derived by using the motion information of the selected merge candidate.

As another example, when an (A)MVP mode is applied to the current block, an image encoding apparatus 100 may construct an (A)MVP candidate list described below and use the motion vector of a motion vector predictor (mvp) candidate selected among the mvp candidates included in the (A)MVP candidate list as the mvp of the current block. In this case, for example, a motion vector indicating a reference block derived by motion estimation described above may be used as the motion vector of the current block, and a mvp candidate having a motion vector with the smallest difference from the motion vector of the current block among the mvp candidates may become the selected mvp candidate. A motion vector difference (MVD) which is a difference obtained by subtracting the mvp from the motion vector of the current block may be derived. In this case, information about the MVD may be signaled to an image decoding apparatus 200. In addition, when an (A)MVP mode is applied, the value of the reference picture index may be constructed as reference picture index information and signaled separately to the image decoding apparatus 200.

An image encoding apparatus 100 may derive residual samples based on the prediction samples S520. An image encoding apparatus 100 may derive the residual samples by comparing the original samples of the current block with the prediction samples.

An image encoding apparatus 100 may encode image information including prediction information and residual information S530. An image encoding apparatus 100 may output encoded image information in the form of a bitstream. The prediction information is information related to the prediction procedure, and may include information about prediction mode information (e.g., a skip flag, a merge flag or a mode index, etc.) and motion information. The information about motion information may include candidate selection information (e.g., a merge index, a mvp flag or a mvp index) which is information for deriving a motion vector. In addition, the information about motion information may include information about the above-described MVD and/or reference picture index information. In addition, the information about motion information may include information representing whether L0 prediction, L1 prediction or bi-prediction is applied. The residual information is information about the residual samples. The residual information may include information about quantized transform coefficients for the residual samples.

An output bitstream may be stored in a (digital) storage medium and transmitted to a decoding device or may be transmitted to an image decoding apparatus 200 through a network.

Meanwhile, as described above, an image encoding apparatus 100 may generate a reconstructed picture (including reconstructed samples and reconstructed blocks) based on the reference samples and the residual samples. This is to derive the same prediction result as that performed by an image decoding apparatus 200 from an image encoding apparatus 100, which may improve coding efficiency. Accordingly, an image encoding apparatus 100 may store a reconstructed picture (or reconstructed samples, reconstructed blocks) in a memory and utilize it as a reference picture for inter prediction. As described above, an in-loop filtering procedure, etc. may be further applied to the reconstructed picture.

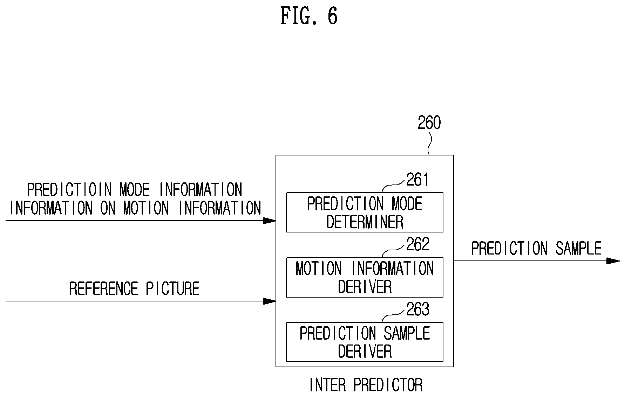

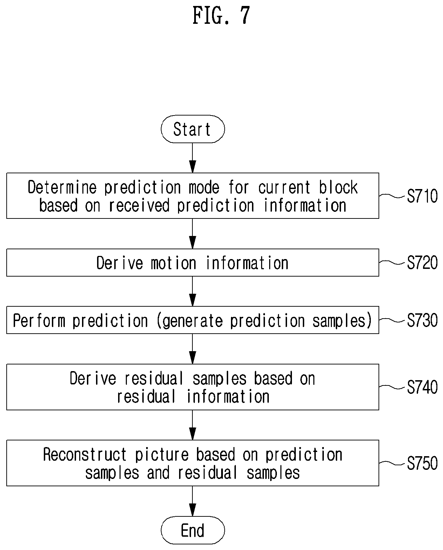

FIG. 6 is diagram schematically representing an inter predictor 260 of an image decoding apparatus 200, and FIG. 7 is a flowchart representing a method for decoding an image based on inter prediction.

An image decoding apparatus 200 may perform an operation corresponding to an operation performed in the image encoding apparatus 100. An image decoding apparatus 200 may perform prediction on a current block based on received prediction information and derive prediction samples.

Specifically, an image decoding apparatus 200 may determine a prediction mode for the current block based on received prediction information S710. An image decoding apparatus 200 may determine which inter prediction mode is applied to the current block based on prediction mode information within the prediction information.

For example, whether the merge mode or the (A)MVP mode is applied to the current block may be determined based on the merge flag. Alternatively, one of various inter prediction mode candidates may be selected based on the mode index. The inter prediction mode candidates may include a skip mode, a merge mode and/or an (A)MVP mode or may include various inter prediction modes described below.

An image decoding apparatus 200 may derive motion information of the current block based on the determined inter prediction mode S720. For example, when a skip mode or a merge mode is applied to the current block, an image decoding apparatus 200 may construct a merge candidate list described below and select one of the merge candidates included in the merge candidate list. The selection may be performed based on the above-described selection information (merge index). The motion information of the current block may be derived by using the motion information of the selected merge candidate. The motion information of the selected merge candidate may be used as the motion information of the current block.

As another example, when an (A)MVP mode is applied to the current block, an image decoding apparatus 200 may construct an (A)MVP candidate list described below and use the motion vector of a mvp candidate selected among the motion vector predictor (mvp) candidates included in the (A)MVP candidate list as the mvp of the current block. The selection may be performed based on the above-described selection information (a mvp flag or a mvp index). In this case, the MVD of the current block may be derived based on information about the MVD, and the motion vector of the current block may be derived based on the mvp of the current block and the MVD. In addition, the reference picture index of the current block may be derived based on the reference picture index information. A picture indicated by the reference picture index in a reference picture list for the current block may be derived as a reference picture referred to for inter prediction of the current block.

Meanwhile, as described below, motion information of the current block may be derived without constructing a candidate list, and in this case, motion information of the current block may be derived according to a procedure initiated in a prediction mode described below. In this case, candidate list construction as described above may be omitted.

An image decoding apparatus 200 may generate prediction samples for the current block based on the motion information of the current block S730. In this case, the reference picture may be derived based on the reference picture index of the current block, and prediction samples of the current block may be derived by using samples of a reference block indicated by the motion vector of the current block on the reference picture. In this case, as described below, a prediction sample filtering procedure for all or part of prediction samples of the current block may be further performed in some cases.

For example, the inter predictor 260 of an image decoding apparatus 200 may include a prediction mode determiner 261, a motion information deriver 262 and a prediction sample deriver 263, and may determine a prediction mode for the current block based on prediction mode information received in a prediction mode determiner 181, derive motion information (a motion vector and/or a reference picture index, etc.) of the current block based on information about motion information received in a motion information deriver 182 and derive prediction samples of the current block in a prediction sample deriver 183.

An image decoding apparatus 200 may generate residual samples for the current block based on received residual information S740. An image decoding apparatus 200 may generate reconstructed samples for the current block based on the prediction samples and the residual samples and generate a reconstructed picture based on this S750. Hereinafter, as described above, an in-loop filtering procedure, etc. may be further applied to the reconstructed picture.

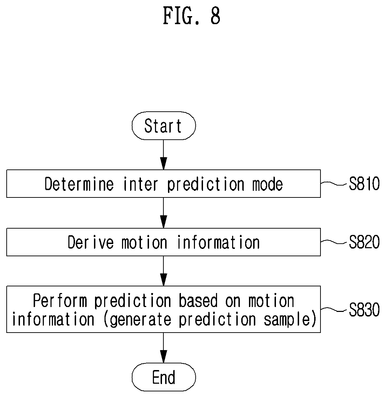

Referring to FIG. 8, as described above, an inter prediction procedure may include an inter prediction mode determination step S810, a motion information derivation step S820 according to a determined prediction mode and a prediction performance (prediction sample generation) step S830 based on derived motion information. The inter prediction procedure may be performed in an image encoding apparatus 100 and an image decoding apparatus 200 as described above.

## Determine an inter prediction mode

A variety of inter prediction modes may be used for prediction of a current block in a picture. For example, various modes such as a merge mode, a skip mode, a motion vector prediction (MVP) mode, an affine mode, a sub-block merge mode, a merge with MVD (MMVD) mode, etc. may be used. A decoder side motion vector refinement (DMVR) mode, an adaptive motion vector resolution (AMVR) mode, a bi-prediction with CU-level weight (BCW), a bi-directional optical flow (BDOF), etc. may be used as an additional or alternative mode. An affine mode may also be called an affine motion prediction mode. A MVP mode may also be called an advanced motion vector prediction (AMVP) mode. In this document, some modes and/or a motion information candidate derived by some modes may be included as one of the motion information-related candidates of other modes. For example, a HMVP candidate may be added as the merge candidate of the merge/skip mode or may be added as the mvp candidate of the MVP mode.

Prediction mode information indicating the inter prediction mode of a current block may be signaled from an image encoding apparatus 100 to an image decoding apparatus 200. The prediction mode information may be included in a bitstream and received by an image decoding apparatus 200. The prediction mode information may include index information indicating one of multiple candidate modes. Alternatively, an inter prediction mode may be indicated through hierarchical signaling of flag information. In this case, the prediction mode information may include at least one flag. For example, whether to apply a skip mode may be indicated by signaling a skip flag, and when a skip mode is not applied, whether to apply a merge mode may be indicated by signaling a merge flag, and when a merge mode is not applied, a MVP mode may be indicated to be applied or a flag for additional distinction may be further signaled. An affine mode may be signaled as an independent mode or may be signaled as a dependent mode such as a merge mode or a MVP mode, etc. For example, an affine mode may include an affine merge mode and an affine MVP mode.

## DMVR (Decoder side Motion Vector Refinement)

When DMVR is applied, a decoder may derive refined motion information through cost comparison based on a template generated by using motion information of a neighboring block in a merge/skip mode. According to an embodiment of the present invention, the precision of motion prediction may be increased and compression performance may be improved without additional signaling information.

Hereinafter, for convenience of a description, it is described based on a decoder side, but DMVR of the present disclosure may be performed in the same manner as on an encoder side. Meanwhile, DMVR may be considered as an example of a procedure for deriving motion information in that a motion vector is refined, or may be considered as an example of a procedure for generating a prediction sample in that a prediction sample is generated based on reference blocks indicated by a refined MV pair.

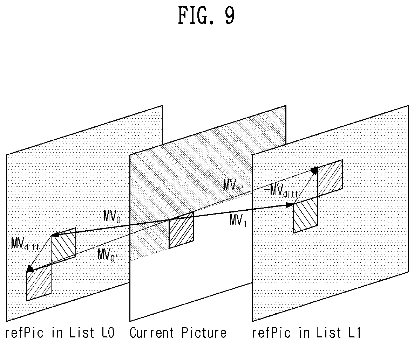

In a bi-prediction process, a refined MV may be searched based on initial MVs in reference picture list L0 and reference picture list L1. According to a bilateral matching (BM) method, distortion between two candidate blocks in reference picture list L0 and list L1 may be calculated. Referring to FIG. 9, SAD between red blocks (indicated by MVdiff) may be calculated based on each MV candidate within a search range centered on an initial MV. In this case, a MV candidate with the lowest SAD may be a refined MV and may be used to generate a bi-prediction signal.

In an embodiment, a decoder may call a DMVR process to improve the accuracy of initial motion compensation prediction (i.e., motion compensation prediction through a conventional merge/skip mode). For example, a decoder may perform a DMVR process when the prediction mode of a current block is a merge mode or a skip mode and bidirectional bi-prediction in which a bidirectional reference picture is in the opposite direction based on a current picture in display order is applied to a current block.

Specifically, for example, DMVR may be applied to CUs coded by the following modes and features.

· CU-level merge mode with a bi-prediction MV
· One reference picture precedes a current picture and the other reference picture follows a current picture
· Distances from two reference pictures to a current picture (i.e., a POC difference) are the same
· A CU has 64 luma samples
· Both CU height and CU width are greater than or equal to 8 luma samples
· A BCW weight index indicates the same weight
· WP is not enabled for a current block

The refined MV derived by a DMVR process may be used not only to generate inter prediction samples, but also to predict a temporal motion vector for future picture coding. An original MV may be used not only in a deblocking process, but also to predict a spatial motion vector for future CU coding.

### AMVP (Advanced Motion Vector Prediction) with Merge (AMVP-merge)

In an AMVP-merge mode, a bi-directional predictor may be composed of an AMVP predictor in one direction and a merge predictor in the other direction. The mode may be enabled for a coding block when a selected merge predictor and an AMVP predictor satisfy a predetermined DMVR condition. Here, a DMVR condition may be a case where at least one past reference picture and a future reference picture exist based on a current picture and a (temporal) distance between each reference picture and a current picture is the same. In this case, bilateral matching MV refinement may be applied to a merge MV candidate and an AMVP MVP as a starting point. In contrast, when a template matching functionality is enabled, template matching MV refinement may be applied to a merge predictor or an AMVP predictor with a higher template matching cost.

The AMVP part of the mode may be signaled as a regular unidirectional AMVP (i.e., a reference index and a MVD), and may have a derived MVP index when a MVP index is signaled for a case in which template matching is used or template matching is disabled.

For AMVP direction LX (here, X may be 0 or 1), a merge part in the other direction (1-LX) may be implicitly derived by minimizing a bilateral matching cost between an AMVP predictor and a merge predictor (i.e., the pair of AMVP and merge motion vectors). For all merge candidates in a merge candidate list having a motion vector in the other direction (1-LX), a bilateral matching cost may be calculated by using a merge candidate MV and an AMVP MV. And, a merge candidate with the lowest cost may be selected. Bilateral matching refinement may be applied to a coding block, starting from the selected merge candidate MV and AMVP MV.

The third pass of a multi-pass DMVR, which is the 8x8 sub-PU BDOF refinement of a multi-pass DMVR, may be enabled for a block coded in an AMVP-merge mode.

An AMVP-merge mode described above may be indicated by a flag, and when the mode is enabled, LX in an AMVP direction may be additionally indicated by a flag.

When a bilateral matching (BM) AMVP-merge mode is used for a current block and template matching is enabled, a MVD may not be signaled. The additional pair of AMVP-merge MVPs is introduced. A merge candidate list may be ordered in ascending order of BM costs. In order to indicate a merge candidate to be used within the ordered merge candidate list, an index (0 or 1) may be signaled. When there is only one candidate in a merge candidate list, the pair of an AMVP MVP and a merge MVP may be padded without bilateral matching MV refinement.

### Block-level Reference Picture List Reordering

A template matching-based block-level reference picture reordering method may be used. For a unidirectional AMVP mode, reference pictures in List 0 and List 1 may be mixed to generate a joint list. For each hypothesis of a reference picture in the joint list, template matching may be performed to calculate a cost. The joint list may be reordered based on the ascending order of the template matching cost. And, an index of a reference picture selected in the reordered joint list may be signaled in a bitstream. For a bi-prediction AMVP mode, a pair list of reference pictures from List 0 and List 1 may be generated and similarly reordered based on the template matching cost. And, an index of the selected pair may be signaled.

## Reference Picture Resampling

Reference picture resampling is inherited from VVC. Compared to the filter length of VVC, e.g., 8, 6 and 4 taps for luma affine coded blocks, luma non-affine coded blocks and each chroma block, corresponding RPR filters in ECM may be increased to 12, 10 and 6 taps.

## Local illumination compensation (LIC)

LIC is an inter prediction technique that models a local illumination change between a current block and its prediction block as a function between a current block template and a reference block template. In this case, parameters of the function may be indicated as scale $\alpha$ and offset $\beta$ which configure linear equation $\alpha*p[x]+\beta$ (here, p[x] is a reference sample indicated by a MV at position x of a reference picture). When wraparound motion compensation is enabled, a MV must be clipped by considering a wraparound offset. Since the parameters $\alpha$ and $\beta$ may be derived based on a current block template and a reference block template, no signaling overhead for the parameters is required except that a LIC flag indicating the use of LIC is signaled for an AMVP mode.
LIC is used for uni-prediction inter coding units, and may have the following characteristics.

- Intra neighboring samples may be used in the process of deriving a LIC parameter.
- LIC is disabled for blocks smaller than 32 luma samples.
- For a non-subblock and affine mode, deriving a LIC parameter is performed based on template block samples corresponding to a current CU, instead of partial template block samples corresponding to a first top-left 16x16 unit.

Meanwhile, samples of a reference block template may be generated by using motion compensation together with a block MV without rounding to integer-pel precision.

## Template Matching

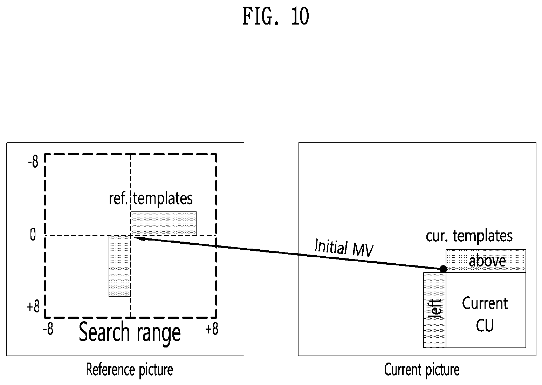

FIG. 10 is a diagram for describing a template matching-based encoding/decoding method.
Template Matching (TM) is a method for deriving a motion vector performed on a decoder side, which is a method in which the motion information of a current block may be refined by finding a template (hereinafter referred to as a "reference template") in a reference picture that is most similar to a template (hereinafter referred to as a "current template") adjacent to a current block (e.g., a current coding unit, a current CU). A current template may be the top neighbor block and/or left neighbor block of a current block or a part of these neighbor blocks. In addition, a reference template may be determined to have the same size as a current template.
As shown in FIG. 10, when the initial motion vector of a current block is derived, a search for a better motion vector may be performed in the neighboring region of an initial motion vector. For example, the range of a neighboring region where the search is performed may be within a [-8, +8]-pel search range based on an initial motion vector. In addition, the size of a search step for performing a search may be determined based on the AMVR mode of a current block. In addition, template matching may also be performed continuously with a bilateral matching process in a merge mode.
When the prediction mode of a current block is an AMVP mode, a motion vector predictor candidate (a MVP candidate) may be determined based on a template matching error. For example, a motion vector predictor candidate (a MVP candidate) that minimizes an error between a current template and a reference template may be selected. Afterwards, template matching for refining a motion vector may be performed on the selected motion vector predictor candidate. In this case, template matching for refining a motion vector may not be performed on a motion vector predictor candidate that is not selected.
More specifically, refinement for the selected motion vector predictor candidate may start from full-pel (integer-pel) accuracy within a [-8, +8]-pel search range by using an iterative diamond search. Alternatively, for a 4-pel AMVR mode, it may start from 4-pel accuracy. Afterwards, a search for half-pel and/or quarter-pel accuracy may be followed according to an AMVR mode. According to the search process, a motion vector predictor candidate may maintain the same motion vector accuracy as indicated by an AMVR mode even after a template matching process. In the iterative search process, when a difference between a previous minimum cost and a current minimum cost is less than an arbitrary threshold value, the search process is terminated. The threshold value may be the same as the area of a block, i.e., the number of samples in a block. Table 1 shows an example of a search pattern according to an AMVR mode and a merge mode accompanied by AMVR.

[Table 1]

| Search pattern | AMVR mode | | | | Merge mode | |
|---|---|---|---|---|---|---|
| | 4-pel | Full-pel | Half-pel | Quarte r-pel | AltIF= 0 | AltIF= 1 |
| 4-pel diamond | v | | | | | |
| 4-pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| 1/8-pel cross | | | | | v | |

When the prediction mode of a current block is a merge mode, a similar search method may be applied to a merge candidate indicated by a merge index. As shown in the Table 1, template matching may be performed up to 1/8-pel accuracy or may skip half-pel accuracy or less, which may be determined depending on whether an alternative interpolation filter is used according to merge motion information. In this case, the alternative interpolation filter may be a filter used when AMVR is a half-pel mode. In addition, when template matching is available, the template matching may operate as an independent process according to whether bilateral matching (BM) is available or may operate as an additional motion vector refinement process between block-based bilateral matching and sub-block-based bilateral matching. Whether the template matching is available and/or whether bilateral matching is available may be determined according to availability condition check. In the above, the accuracy of a motion vector may refer to the accuracy of a motion vector difference (MVD).

**Problems in Conventional Technology**

For an amvpMerge mode described above, when an amvpMerge flag is transmitted and the value of a corresponding flag is 1, bi-directional prediction is performed without transmitting the value of inter_pred_idc in a table below.

【Table 2】

**inter_pred_idc**[ x0 ][ y0 ] specifies whether list0, list1, or bi-prediction is used for the current coding unit according to Table 14. The array indices x0, y0 specify the location ( x0, y0 ) of the top-left luma sample of the considered coding block relative to the top-left luma sample of the picture.

| inter_pred_idc | Name of inter_pred_idc | | |
|---|---|---|---|
| | ( cbWidth + cbHeight ) > 12 | ( cbWidth + cbHeight ) == 12 | ( cbWidth + cbHeight ) == 8 |
| 0 | PRED_L0 | PRED_L0 | n.a. |
| 1 | PRED_L1 | PRED_L1 | n.a. |
| 2 | PRED_BI | n.a. | n.a. |

For an amvpMerge mode, AMVP mode-based predicted motion information is derived by referring to a reference picture in a reference picture list in one direction, and merge mode-based predicted motion information is derived by referring to a reference picture in a reference picture list in the opposite direction. To this end, when a reference picture index for block-level reference picture list reordering is signaled, an AMVP candidate referring to the reference picture of a corresponding list is derived based on whether a reference picture indicated by the reference picture index belongs to a L0 list or a L1 list, and prediction motion information is derived by using an AMVP method.

In order to perform the process, block-level reference picture list reordering must have already been performed in a parsing step, but since it is possible to know which reference picture list a reference picture indicated by a reference picture index refers to, a pipeline delay problem may occur.

In order to solve this pipeline delay problem, a method for performing block-level reference picture list reordering in a decoding process step, not in a parsing step, may be considered. However, in this case, it is impossible to know which list a reference picture indicated by a reference picture index belongs to among a L0 list and a L1 list. In addition, since it is impossible to know whether a corresponding reference picture is reference sample resampling (RPR), a problem may occur in which parsing may not be performed any more while transmitting the index of an AMVP candidate list in a subsequent step. This problem occurs because in the process of transmitting an AMVP candidate index for amvpMerge, adaptive signaling is performed to indicate two candidates when the template matching-based motion compensation of an amvpMerge prediction candidate may be performed on a decoding side and to indicate three candidates when the motion compensation may not be performed on a decoding side. In addition, a template matching-based motion compensation process may not be performed when a referenced reference picture is RPR. As a result, when it is impossible to know whether a reference picture to be currently referenced is RPR, it is impossible to know whether to parse two candidates or three candidates in a parsing step, so parsing may not be performed any more on a decoding side.

Furthermore, when block-level reference picture list reordering is performed in a decoding process step, not in a parsing step, a reference picture list for performing prediction in the AMVP mode of amvpMerge in a parsing step may be defined as L0 or L1 uni-prediction. In this case, when it is arbitrarily defined as L1 uni-prediction, a SMVD flag is transmitted even though a symmetric motion vector difference (SMVD) scheme may not be applied in an amvpMerge mode, so a problem occurs in which transmission of unnecessary bits is performed even though local illumination compensation (LIC) described above may not be used in an amvpMerge mode. In addition, when it is arbitrarily defined as L0 uni-prediction to solve this, transmission of a SMVD flag may be prevented, but a problem in which a LIC flag is transmitted may still not be solved.

In order to solve problems described above, according to the embodiments of the present disclosure, a single reference picture list for an amvpMerge mode may be configured, and reordering for the list may be skipped or performed without a pipeline delay in a parsing step. In addition, in an amvpMerge mode, the maximum number of candidates may be adaptively determined based on whether template matching-based motion compensation is allowed, determined at a higher level, and a cMax value in a truncated binarization process may be determined based on the determined maximum number of candidates. In addition, in an amvpMerge mode, a LIC flag may not be parsed regardless of a prediction direction, i.e., the value of inter_pred_idc. In addition, in an amvpMerge mode, the maximum number of candidates may be adaptively determined based on whether a reference picture is RPR, and a binarized mvp index may be parsed with the determined maximum number of candidates. Hereinafter, embodiments of the present disclosure will be described in more detail by referring to attached diagrams. Embodiments described below may be implemented individually or may be implemented in a combination of at least two.

## **Embodiment 1**

According to Embodiment 1 of the present disclosure, in the motion information prediction process of an amvpMerge mode, a reference picture list referred to by an amvpMerge prediction candidate may be composed of a single list based on a L0 list and a L1 list. A reordering process for the single list may be skipped or limited to only simple reordering, and as a result, it is possible to know reference picture information indicated by a reference picture index without a pipeline delay in a parsing step. In addition, it is also possible to know whether to perform reference picture resampling (RPR) or the direction (L0 or L1) of a reference picture list.

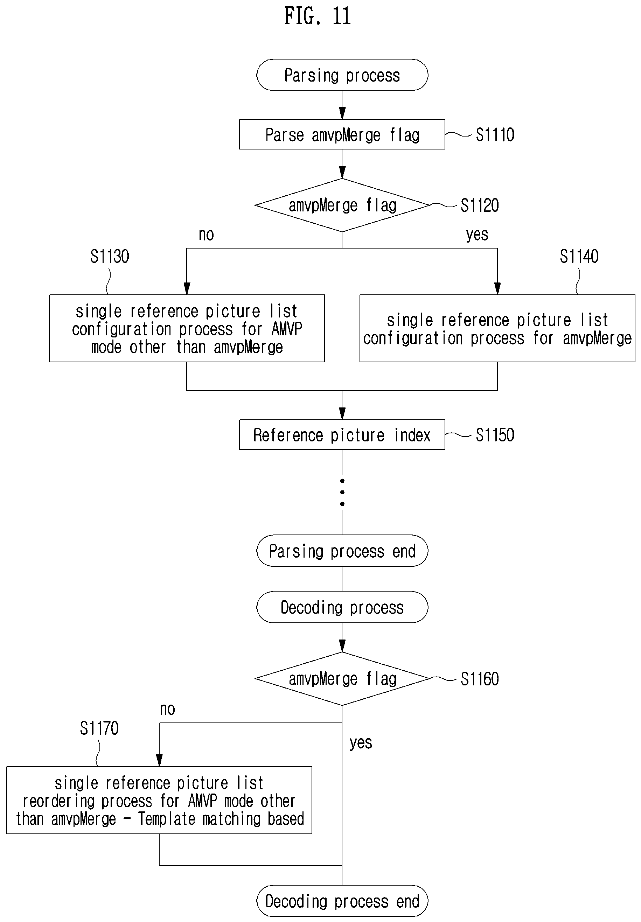

FIG. 11 is a diagram showing a decoder operation for an amvpMerge mode according to an embodiment of the present disclosure. A decoder operation for an amvpMerge mode may be divided into a parsing process and a decoding process. In a parsing process, a reference picture list may be configured based on whether an amvpMerge mode is applied. And, in a decoding process, the reference picture list may be reordered based on whether an amvpMerge mode is applied.

Referring to FIG. 11, in a parsing process, an image decoding device may parse an amvpMerge flag from a bitstream S1110.

When an amvpMerge flag is 0 or False ('NO' in S1120), an amvpMerge mode may not be applied, and an image decoding device may configure a single reference picture list for an AMVP mode S1130.

In contrast, when an amvpMerge flag is 1 or True ('YES' in S1120), an amvpMerge mode may be applied, and an image decoding device may configure a single reference picture list for an amvpMerge mode S1140. In this case, the single reference picture list may be configured by using a L0 list and a L1 list.

And, an image decoding device may obtain a reference picture index indicating a reference picture that will be used for motion information prediction within a reference picture list configured in S1130 or S1140 described above S1150.

Next, in a decoding process, when an amvpMerge flag is 0 or False ('NO' in S1160), an image decoding device may reorder a single reference picture list for an AMVP mode S1170. In an embodiment, the reordering process may be performed based on all template matching technologies.

In contrast, when an amvpMerge flag is 1 or True ('YES' in S1160), reordering of a single reference picture list for an amvpMerge mode may be skipped. By not reordering picture order in a reference picture list in an amvpMerge mode (in a CU, PU or arbitrary unit), reference picture information indicated by a reference picture index obtained in a parsing step may be interpreted without a pipeline delay. In other words, reference picture information referred to by a reference picture index transmitted through a bitstream may be referred to in the decoding/decoding process of a candidate index and a TM-based coding tool control flag transmitted at the next position of a reference picture index.

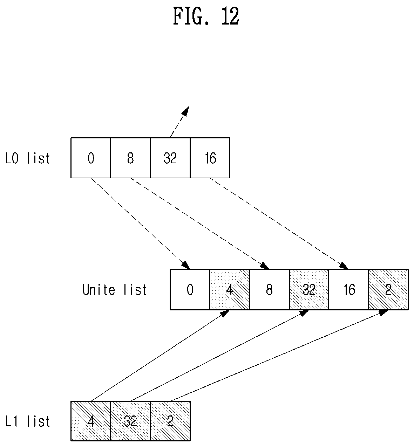

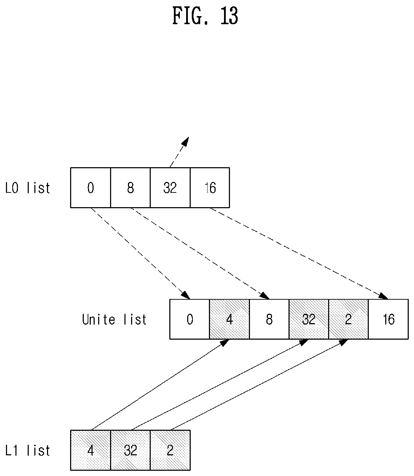

Meanwhile, since template matching-based reordering is not performed in a decoding process, index transmission efficiency may be determined according to the picture order of a reference picture list configured in a parsing step. Considering this, in an amvpMerge mode, a single reference picture list is configured based on a L0 list and a L1 list. A specific example of the single reference picture list is as in FIGS. 12 and 13. In FIGS. 12 and 13, each number (e.g., 0, 8, 32, 16, etc.) represents the picture order count (POC) value of a corresponding reference picture.

First, referring to the example of FIG. 12, reference picture 0 of a first index in a L0 list is inserted into a first index position in a single list, and reference picture 4 of a first index in a L1 list is inserted into a second index position in a single list. Next, reference picture 8 of a second index in a L0 list is inserted into a third index position in a single list, and reference picture 32 of a second index in a L1 list is inserted into a fourth index position in a single list. Since reference picture 32 is already inserted into a single list from a L1 list, reference picture 32 of a third index in a L0 list is discarded. And, reference picture 16 of a fourth index in a L0 list is inserted into a fifth index position in a single list, and reference picture 2 of a third index in a L1 list is inserted into a last index position in a single list, so a single list configuration may be completed.

Referring to the example of FIG. 13 below, reference picture 0 of a first index in a L0 list is inserted into a first index position in a single list, and reference picture 4 of a first index in a L1 list is inserted into a second index position in a single list. Next, reference picture 8 of a second index in a L0 list is inserted into a third index position in a single list, and reference picture 32 of a second index in a L1 list is inserted into a fourth index position in a single list. Next, reference picture 2 of a third index in a L1 list is inserted into a fifth index position in a single list. Since reference picture 32 is already inserted into a single list from a L1 list, reference picture 32 of a third index in a L0 list is discarded. And, reference picture 2 of a third index in a L1 list is inserted into a fifth index position in a single list, and reference picture 16 of a fourth index in a L0 list is inserted into a last index position in a single list, so a single list configuration may be completed.

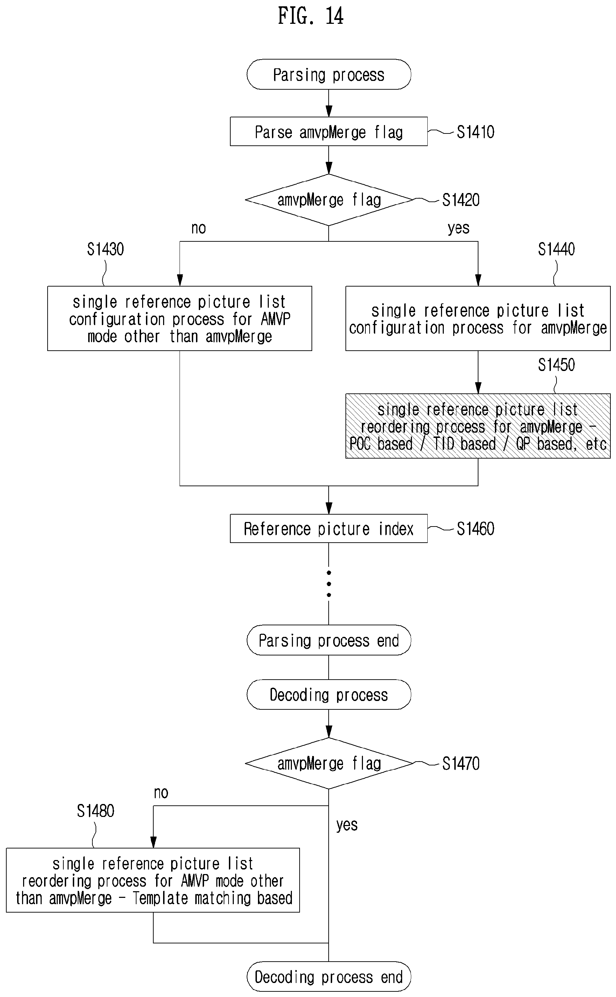

Meanwhile, as in the method of FIG. 11, the process of reordering a reference picture list in an amvpMerge mode may be changed to be performed in a parsing process, instead of being completely skipped. The specific details thereof are as shown in FIG. 14.

FIG. 14 is a diagram showing a decoder operation for an amvpMerge mode according to another embodiment of the present disclosure. As in FIG. 11 described above, a decoder operation for an amvpMerge mode may be divided into a parsing process and a decoding process.

Referring to FIG. 14, in a parsing process, an image decoding device may parse an amvpMerge flag from a bitstream S1410.

When an amvpMerge flag is 0 or False ('NO' in S1420), an amvpMerge mode may not be applied, and an image decoding device may configure a single reference picture list for an AMVP mode S1430.

In contrast, when an amvpMerge flag is 1 or True ('YES' in S1420), an amvpMerge mode may be applied, and an image decoding device may configure a single reference picture list for an amvpMerge mode S1440. And, an image decoding device may perform a reordering process for the configured single reference picture list S1450. In this case, the reordering process is not performed based on template matching, but may be performed by using only pre-decoded reference picture information such as picture order count (POC), a temporal ID (TID), a quantization parameter (QP), etc. In this respect, a decoder operation in FIG. 14 is different from FIG. 11.

An image decoding device may obtain a reference picture index indicating a reference picture which will be used for motion information prediction within a reference picture list configured through S1430 or S1440 and S1450 S1460.

Next, in a decoding process, when an amvpMerge flag is 0 or False ('NO' in S1470), an image decoding device may perform a reordering process for a single reference picture list for an AMVP mode S1480. In this case, the reordering process may be performed based on template matching, unlike a reordering process in S1450.

In contrast, when an amvpMerge flag is 1 or True ('YES' in S1470), a template matching-based reordering process for a single reference picture list for an amvpMerge mode may be skipped.

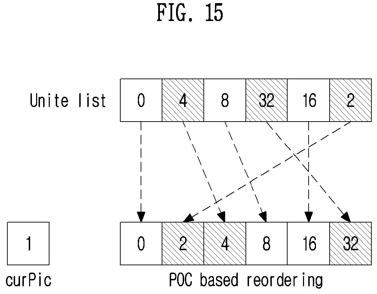

Meanwhile, a specific example of a process for reordering the reference picture list of an amvpMerge mode performed in a parsing step is as shown in FIGS. 15 to 17. In FIGS. 15 to 17, each number (e.g., 0, 4, 8, etc.) represents the picture order count (POC) value of a corresponding reference picture. In addition, in FIGS. 15 to 17, it is assumed that the POC value of a current picture is 1.

A single list for an amvpMerge mode may be reordered based on the POC value of each picture as in the example of FIG. 15. For example, the single list may be reordered in the order of 'reference picture 0 → reference picture 2 → reference picture 4 → reference picture 8 → reference picture 16 → reference picture 32' (i.e., in ascending order of POC).

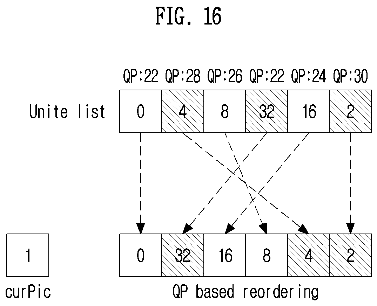

Alternatively, a single list for an amvpMerge mode may be reordered based on the QP value of each picture as in the example of FIG. 16. For example, the single list may be reordered in the order of 'reference picture 0 → reference picture 32 → reference picture 16 → reference picture 8 → reference picture 4 → reference picture 2' (i.e., in ascending order of QP).

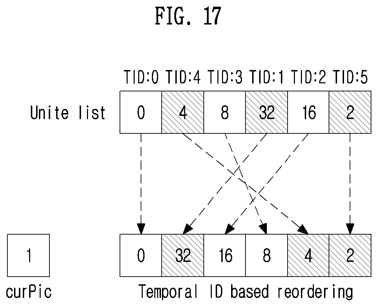

Alternatively, a single list for an amvpMerge mode may be reordered based on the Temporal ID value of each picture as in the example of FIG. 17. For example, the single list may be reordered in the order of 'reference picture 0 → reference picture 32 → reference picture 16 → reference picture 8 → reference picture 4 → reference picture 2' (i.e., in ascending order of TID).

As above, according to Embodiment 1 of the present disclosure, a single reference picture list for an amvpMerge mode may be configured, and reordering for the list may be skipped or performed without a pipeline delay in a parsing step.

### Embodiment 2

According to Embodiment 2 of the present disclosure, in an amvpMerge mode, the AMVP maximum candidate index value (or, the maximum number of candidates) may be adaptively determined based on whether template matching-based motion compensation is allowed, signaled in a high level syntax. When template matching-based motion compensation is allowed in an amvpMerge mode, the allowable maximum number of candidates may be determined to be the same regardless of whether a specific condition of a reference picture actually referenced (e.g., whether it is RPR) is satisfied.

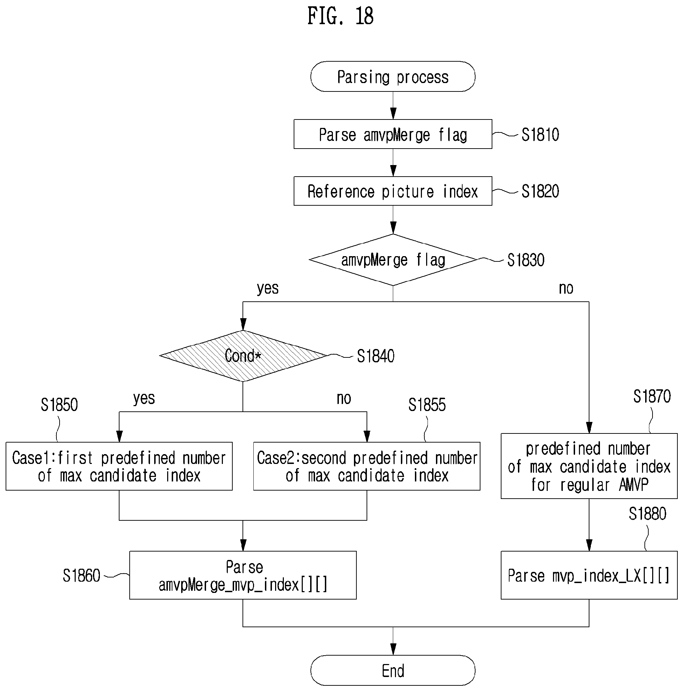

FIG. 18 is a diagram showing a mvp index parsing process according to an embodiment of the present disclosure.

Referring to FIG. 18, an image decoding device may parse an amvpMerge flag from a bitstream S1810 and obtain a reference picture index S1820.

When an amvpMerge flag is 1 or True ('YES' in S1830), an amvpMerge mode is applied, so an image decoding device may determine whether template matching-based motion compensation is allowed (Cond*) S1840. Whether allowed or not may be determined at a sequence, picture or slice level through a high level syntax (e.g., SPS, PPS, PH, SH, etc.). For example, when template matching-based motion compensation is not allowed at a sequence level ('YES' in S1840, Cond*=True), the maximum candidate index may be determined as a predefined first value (CASE1, S1850), and a mvp index may be signaled based on the determined maximum candidate index. In contrast, when template matching-based motion compensation is allowed at a sequence level ('NO' in S1840, Cond*=False), the maximum candidate index may be determined as a predefined second value (CASE2, S1855), and a mvp index may be signaled based on the determined maximum candidate index. For example, when it is determined that template matching-based AMVP is not performed in a SPS, binarization for a mvp index may be applied to indicate up to three candidate indices regardless of whether an actually referenced reference picture is reference picture resampling (RPR). Alternatively, when it is determined that template matching-based AMVP is not performed in a SPS, binarization for a mvp index may be applied to indicate up to two candidate indices regardless of whether an actually referenced reference picture is RPR. And, an image decoding device may parse amvpMerge_mvp_index[][] based on the determined maximum candidate index value S1860. In an example, amvpMerge_mvp_index[][] may follow a truncated binarization process. In this case, the input of the process may be a binarization request for cMax and a syntax element having a synVal value, and the output of the process may be the binarized value of the syntax element. The bin string of the syntax element may be represented by Equation below.

$$[Equation\ 1]$$
$$n = cMax + 1$$
$$k = Floor(Log2(n))$$
$$u = (1 << (k+1))-n$$

When synVal is smaller than variable u in Equation 1 above, a bin string may be derived by performing a fixed length (FL) binarization process on synVal having a cMax value equal to $(1<<k)-1$. In contrast, when synVal is greater than or equal to variable u in Equation 1 above, a bin string may be derived by performing a fixed length (FL) binarization process on (synVal+u) having a cMax value equal to $(1<<(k+1))-1$.

When an amvpMerge flag is 0 or False ('NO' in S1830), an amvpMerge mode is not applied, and an image decoding device may determine the maximum candidate index for a regular AMVP mode as a predefined third value S1870. Then, an image decoding device may parse mvp_index_LX[][] based on the determined maximum candidate index value S1880.

As above, according to Embodiment 2 of the present disclosure, in an amvpMerge mode, the maximum number of candidates may be adaptively determined based on whether template matching-based motion compensation is allowed, determined at a higher level. In addition, a cMax value in a truncated binarization process may be determined based on the determined maximum number of candidates.

### Embodiment 3

According to Embodiment 3 of the present disclosure, when an amvpMerge mode is applied, local illumination compensation (LIC) flag parsing may be skipped regardless of a prediction direction, i.e., the value of inter_pred_idc.

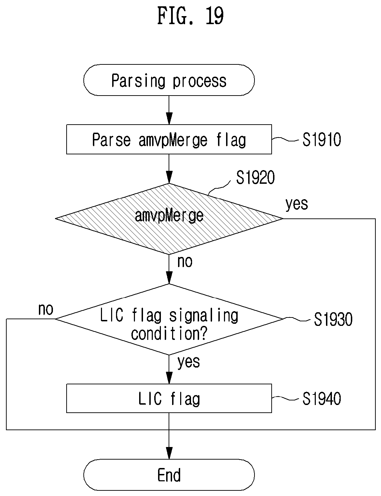

FIG. 19 is a diagram showing a decoder operation according to an embodiment of the present disclosure.

Referring to FIG. 19, an image decoding device may parse an amvpMerge flag S1910.

When an amvpMerge flag is 0 or False ('NO' in S1920), an amvpMerge mode is not applied, so an image decoding device may determine the signaling condition of a LIC flag S1930. In an embodiment, the signaling condition of a LIC flag may be whether inter_pred_idc is defined as bidirectional prediction. For example, when inter_pred_idc is defined as bidirectional prediction, parsing of a LIC flag may be skipped.

When the signaling condition of a LIC flag is satisfied as a determination result ('YES' in S1930), an image decoding device may parse a LIC flag S1940. In contrast, when the signaling condition of a LIC flag is not satisfied ('NO' in S1930), an image decoding device may skip parsing of a LIC flag S1940.

Meanwhile, when an amvpMerge flag is 1 or True ('YES' in S1920), an amvpMerge mode is applied, so an image decoding device may skip both processes of parsing a LIC flag described above S1930 and S1940.

As above, according to Embodiment 3 of the present disclosure, in an amvpMerge mode, a LIC flag may not be parsed regardless of a prediction direction, i.e., the value of inter_pred_idc. Accordingly, when inter_pred_idc is not defined as bi-prediction in an amvpMerge mode, a problem may be solved in which compression efficiency is reduced by transmitting a LIC flag even when LIC may not be applied because amvpMerge is recognized as uni-prediction in a LIC parsing process.

### Embodiment 4

According to Embodiment 4 of the present disclosure, in an amvpMerge mode, a reference picture list may be composed of a single reference picture list. The single reference picture list may be reordered based on a predetermined RPR condition, and the maximum number of candidates for an amvpMerge mode may be adaptively determined based on whether to perform RPR. In other words, when a reference picture indicated by a reference picture index obtained in the parsing process of a mvp index is resampled, the allowable maximum number of candidates may be adaptively predetermined to apply a different binarization process. According to an embodiment, when the predetermined maximum number of candidates is 1, a mvp index value may be derived (or inferred) as 0 without a separate parsing process.

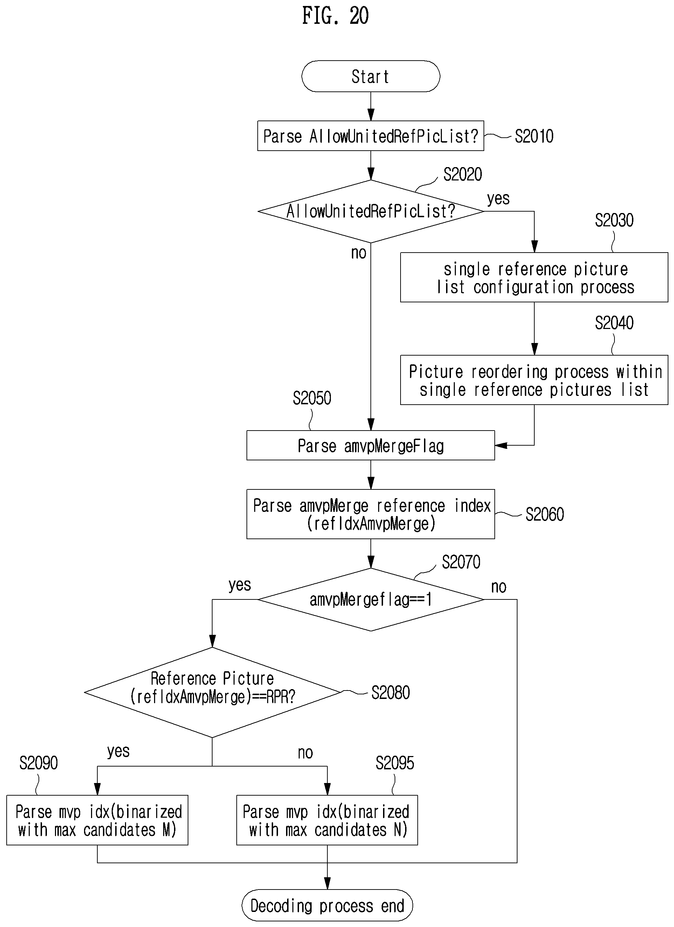

FIG. 20 is a diagram showing a mvp index parsing method in an amvpMerge mode according to an embodiment of the present disclosure.

Referring to FIG. 20, an image decoding device may parse a syntax element AllowUnitedRefPicList representing whether to allow a single reference picture list from a bitstream S2010. In an embodiment, AllowUnitedRefPicList may be obtained at a CU level, in which case a reference picture list may be configured for each CU. In another embodiment, AllowUnitedRefPicList may be obtained at a higher level (e.g., SPS, PPS, PH, SH), in which case a reference picture list may be configured equally for all CUs referring to a corresponding higher level.

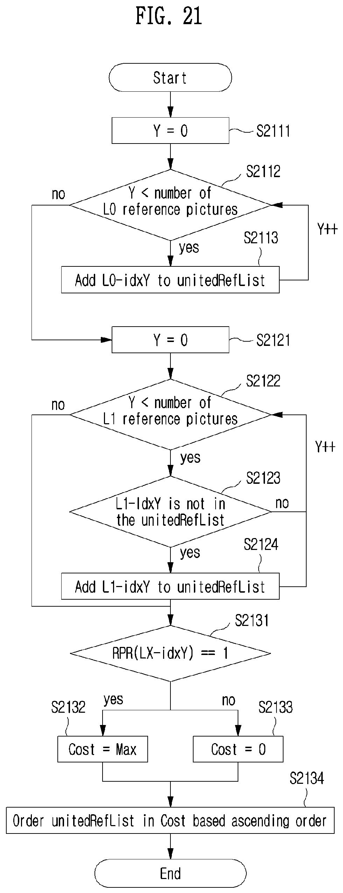

When AllowUnitedRefPicList is 1 or True ('YES' in S2020), an image decoding device may configure a single reference picture list S2030 and reorder the configured single reference picture list S2040. In this case, the reordering may be performed through whether to perform RPR, the size comparison of template costs, etc. A specific example of a method for reordering the single reference picture list based on whether to perform RPR is as shown in FIG. 21.

Referring to FIG. 21, an image decoding device may add the L0 reference picture of index idxY to a single reference picture list uniRefList by looping as many times as the number of L0 reference pictures S2110. To this end, loop control variable Y may be initialized to 0 S2111. And, when the variable Y is smaller than the number of L0 reference pictures ('YES' in S2112), an image decoding device may add the L0 reference picture of index idxY to a single reference picture list uniRefList S2113.

When the loop is terminated, the variable Y is initialized to 0 again S2121. And, an image decoding device may add the L1 reference picture of index idxY to a single reference picture list uniRefList by looping as many times as the number of L1 reference pictures S2120. Specifically, when the variable Y is smaller than the number of L1 reference pictures ('YES' in S2122), an image decoding device may determine whether the L1 reference picture of index idxY does not exist in a single reference picture list uniRefList S2123. As a result of the determination, when a corresponding reference picture does not exist in a single reference picture list uniRefList ('YES' in S2123), an image decoding device may add a corresponding reference picture to a single reference picture list uniRefList S2124 and repeat the above-described process S2122 to S2124. In contrast, when a corresponding reference picture already exists in a single reference picture list uniRefList ('NO' in S2123), an image decoding device may increase the variable Y by 1 and repeat the above-described process S2122 to S2124 without adding a corresponding reference picture to a single reference picture list uniRefList.

An image decoding device may reorder a single reference picture list uniRefList configured through the above-described process based on whether to perform RPR S2130. Specifically, an image decoding device may determine whether each reference picture (LX-idxY) in a single reference picture list is resampled S2131. As a result of the determination, when a corresponding reference picture is resampled ('YES' in S2131), an image decoding device may set the template cost of a corresponding reference picture as Max S2132. In contrast, when a corresponding reference picture is not resampled ('NO' in S2131), an image decoding device may set the template cost of a corresponding reference picture as 0 S2133. And, an image decoding device may order a single reference picture list uniRefList in ascending order of template costs S2134.

According to this reordering method in FIG. 21, a reference picture with a smaller template cost may have a reference picture index value of fewer bits. In other words, a reference picture with a small template cost is positioned at the front in a single reference picture list.

Referring to FIG. 20 again, when AllowUnitedRefPicList is 0 or False ('NO' in S2020), the above-described single reference picture list configuration S2030 and reordering S2040 may be skipped.

An image decoding device may parse amvpMergeFlag representing whether to apply an amvpMerge mode from a bitstream S2050. In an embodiment, amvpMergeFlag may be obtained at a CU or PU level. In addition, an image decoding device may parse an amvpMerge reference index (i.e., refIdxAmvpMerge) indicating a reference picture to be used in an amvpMerge mode from a bitstream S2060.

When amvpMergeFlag is 1 or True ('YES' in S2070), an image decoding device may parse a mvp index based on whether to perform RPR S2080 S2090 and S2095. Specifically, when a reference picture indicated by refIdxAmvpMerge is resampled (i.e., Reference Picture(refIdxAmvpMerge) = RPR) ('YES' in S2080), an image decoding device may parse a mvp idx binarized with M, the maximum number of candidates, from a bitstream S2090. In contrast, when a reference picture indicated by refIdxAmvpMerge is not resampled (i.e., Reference Picture(refIdxAmvpMerge) != RPR) ('NO' in S2080), an image decoding device may parse a mvp idx binarized with N, the maximum number of candidates, from a bitstream S2095. In this way, in an amvpMerge mode, the maximum number of candidates may be adaptively determined as M or N based on whether a reference picture is resampled, and mvp idx may be parsed by using a binarization process based on the maximum number of candidates.

Meanwhile, when amvpMergeFlag is 0 or False ('NO' in S2070), the above-described RPR check S2080 and mvp idx parsing based on whether to perform RPR S2090 and S2095 may be skipped.

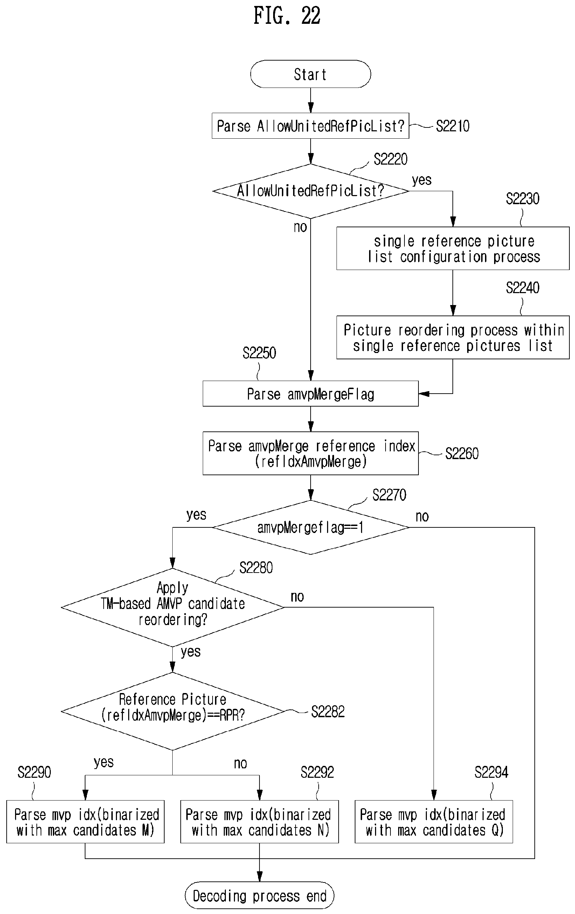

FIG. 22 is a diagram showing a mvp index parsing method in an amvpMerge mode according to another embodiment of the present disclosure. The single reference picture list configuration S2210 to S2240 and the amvp-MergeFlag and refIdxAmvpMerge parsing process S2250 and S2260 in FIG. 22 are as described above by referring to FIG. 20. Hereinafter, a mvp index parsing process will be described in detail.

When amvpMergeFlag is 1 or True ('YES' in S2270), an image decoding device may parse a mvp index based on whether an AMVP candidate is reordered based on template matching and whether RPR is performed.

Specifically, when template matching-based reordering is not performed for AMVP candidates ('NO' in S2280), an image decoding device may determine whether to perform RPR S2282. As a result of the determination, when a reference picture indicated by refIdxAmvpMerge is resampled (i.e., Reference Picture(refIdxAmvpMerge) = RPR) ('YES' in S2282), an image decoding device may parse mvp idx binarized with M, the maximum number of candidates, from a bitstream S2290. In contrast, when a reference picture indicated by refIdxAmvpMerge is not resampled (i.e., Reference Picture(refIdxAmvpMerge) != RPR) ('NO' in S2282), an image decoding device may parse a mvp idx binarized with N, the maximum number of candidates, from a bitstream S2292.

When template matching-based reordering is not performed for AMVP candidates ('NO' in S2280), an image decoding device may parse mvp idx binarized with Q, the maximum number of candidates, from a bitstream S2294.

In this way, in an amvpMerge mode, the maximum number of candidates may be adaptively determined as any one of M, N or Q based on whether an AMVP candidate is reordered based on template matching and whether RPR is performed. And, mvp idx may be parsed by using a binarization process based on the maximum number of candidates.

Meanwhile, when amvpMergeFlag is 0 or False ('NO' in S2270), all of checking whether to perform the above-described template matching-based reordering S2280, checking whether to perform RPR S2282 and mvp idx parsing based on whether to perform RPR S2290 to S2294 may be skipped.

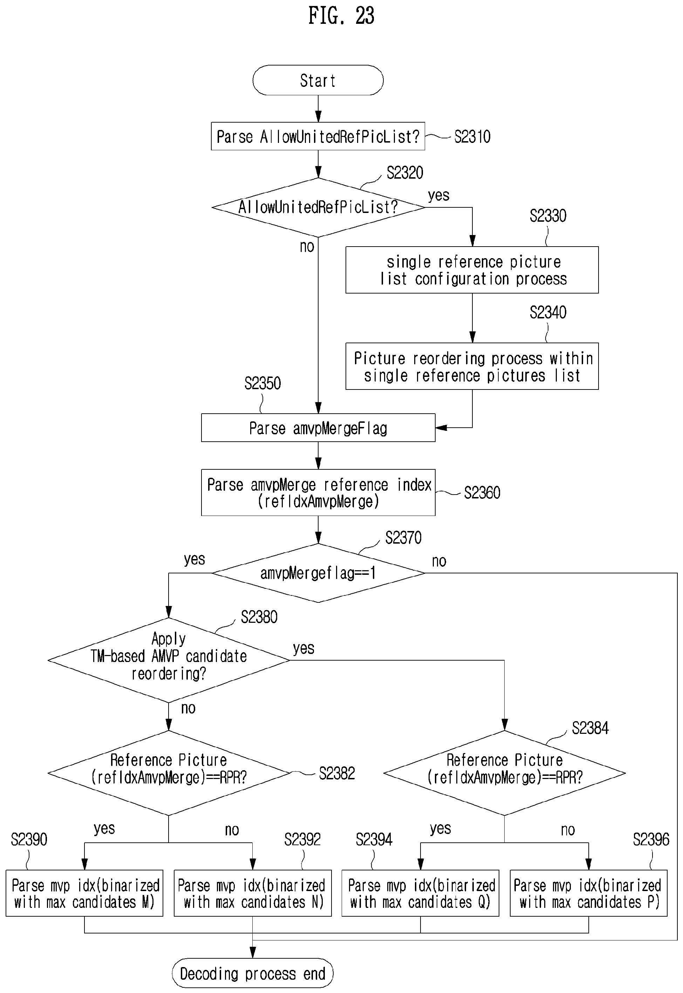

FIG. 23 is a diagram showing a mvp index parsing method in an amvpMerge mode according to another embodiment of the present disclosure. The single reference picture list configuration S2310 to S2340 and the amvp-MergeFlag and refIdxAmvpMerge parsing process S2350 and S2360 in FIG. 23 are as described above by referring to FIG. 20. Hereinafter, a mvp index parsing process will be described in detail.

When amvpMergeFlag is 1 or True ('YES' in S2370), an image decoding device may parse a mvp index based on whether to perform template matching-based reordering and whether to perform RPR.

Specifically, when template matching-based reordering is not performed for AMVP candidates ('NO' in S2380), an image decoding device may determine whether to perform RPR S2382. As a result of the determination, when a reference picture indicated by refIdxAmvpMerge is resampled (i.e., Reference Picture(refIdxAmvpMerge) = RPR) ('YES' in S2382), an image decoding device may parse mvp idx binarized with M, the maximum number of candidates, from a bitstream S2390. In contrast, when a reference picture indicated by refIdxAmvpMerge is not resampled (i.e., Reference Picture(refIdxAmvpMerge) != RPR) ('NO' in S2382), an image decoding device may parse a mvp idx binarized with N, the maximum number of candidates, from a bitstream S2392.

When template matching-based reordering is performed for AMVP candidates ('NO' in S2380), an image decoding device may determine whether to perform RPR S2384. As a result of the determination, when a reference picture indicated by refIdxAmvpMerge is resampled (i.e., Reference Picture(refIdxAmvpMerge) = RPR) ('YES' in S2384), an image decoding device may parse mvp idx binarized with Q, the maximum number of candidates, from a bitstream S2394. In contrast, when a reference picture indicated by refIdxAmvpMerge is not resampled (i.e., Reference Picture(refIdxAmvpMerge) != RPR) ('NO' in S2384), an image decoding device may parse mvp idx binarized with P, the maximum number of candidates, from a bitstream S2396.

In this way, in an amvpMerge mode, the maximum number of candidates may be adaptively determined as any one of M, N, Q or P based on whether an AMVP candidate is reordered based on template matching and whether RPR is performed. And, mvp idx may be parsed by using a binarization process based on the maximum number of candidates.

Meanwhile, when amvpMergeFlag is 0 or False ('NO' in S2370), all of checking whether to perform the above-described template matching-based reordering S2380, checking whether to perform RPR S2382 and mvp idx parsing based on whether to perform RPR S2390 to S2396 may be skipped.

In the example of FIGS. 20 to 23 described above, variables M, N, Q and P are a predefined value, and when a corresponding value is 1, the allowable maximum number of candidates refers to 1. When the maximum number of candidates is 1, mvp idx is not signaled, and a mvp idx value may be derived (or inferred) as 0. In contrast, when the maximum number of candidates is greater than 1, mvp idx may be signaled. For example, when the maximum number of candidates is 2, 1-bit mvp idx may be signaled, and when the maximum number of candidates is 3, 2-bit mvp idx may be signaled.

As above, according to Embodiment 4 of the present disclosure, in an amvpMerge mode, the maximum number of candidates may be adaptively determined based on whether a reference picture is RPR, and a binarization process for a mvp index may be applied based on the determined maximum number of candidates.

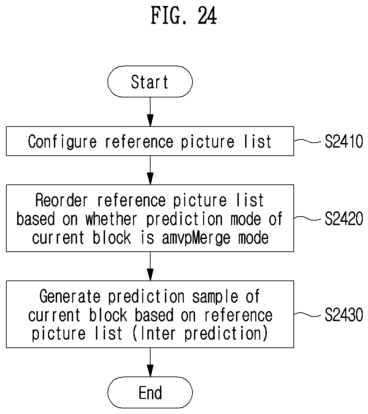

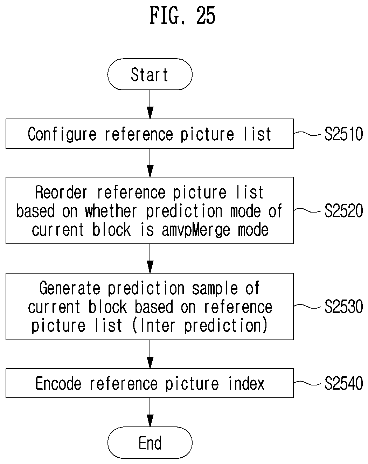

Hereinafter, referring to FIGS. 24 and 25, an image encoding/decoding method according to an embodiment of the present disclosure will be described in detail.

FIG. 24 is a flowchart showing an image decoding method according to an embodiment of the present disclosure. An image decoding method in FIG. 24 may be performed by an image decoding device in FIG. 3.

Referring to FIG. 24, when inter prediction is applied to a current block, an image decoding device may configure a reference picture list for a current block S2410. An image decoding device may reorder the reference picture list based on whether the prediction mode of the current block is an amvpMerge mode S2420. Here, an amvpMerge mode refers to a prediction mode in which an Advanced Motion Vector Prediction (AMVP) mode is applied for the first prediction direction of a current block and a merge mode is applied for a second prediction direction. In an embodiment, based on the prediction mode of the current block being an amvpMerge mode, template matching-based reordering may not be applied to the reference picture list. And, an image decoding device may generate the prediction sample of the current block based on the reference picture list S2430.

In an embodiment, the reference picture list may be configured as a single list based on the first reference picture list of the first prediction direction and the second reference picture list of the second prediction direction.

In an embodiment, based on the prediction mode of the current block being an amvpMerge mode, the reference picture list may be reordered based on at least one of a picture order count (POC) difference value between a current picture and a reference picture, a temporal ID of a reference picture or a quantization parameter.

In an embodiment, based on the prediction mode of the current block being an amvpMerge mode, the maximum number of motion vector predictor (MVP) candidates for the first prediction direction may be determined differently based on whether template matching-based motion compensation is allowed.

In an embodiment, based on the prediction mode of the current block being an amvpMerge mode, a LIC flag representing whether local illumination compensation (LIC) is applied to the current block may be obtained from a bitstream only when bidirectional prediction is applied to the current block.

In an embodiment, based on the prediction mode of the current block being an amvpMerge mode, the maximum number of AMVP candidates for the first prediction direction may be determined differently based on whether the reference picture of the current block is resampled. In this case, the reordering may be performed based on whether each reference picture in the reference picture list is resampled. In addition, the reordering may be performed by setting the template cost of a resampled reference picture in the reference picture list as a predetermined maximum value.

In an embodiment, based on the prediction mode of the current block being an amvpMerge mode, the maximum number of AMVP candidates for the first prediction direction may be determined differently based on whether template matching-based reordering is applied to the AMVP candidates.

FIG. 25 is a flowchart showing an image encoding method according to an embodiment of the present disclosure. An image encoding method in FIG. 25 may be performed by an image encoding device in FIG. 2.

Referring to FIG. 25, when inter prediction is applied to a current block, an image encoding device may configure a reference picture list for a current block S2510. An image encoding device may reorder the reference picture list based on whether the prediction mode of the current block is an amvpMerge mode S2520. Here, an amvpMerge mode refers to a prediction mode in which an Advanced Motion Vector Prediction (AMVP) mode is applied for the first prediction direction of a current block and a merge mode is applied for a second prediction direction. In an embodiment, based on the prediction mode of the current block being an amvpMerge mode, template matching-based reordering may not be applied to the reference picture list. An image encoding device may generate the prediction sample of the current block based on the reference picture list S2530. Then, an image encoding device may encode a reference picture index representing a reference picture used to generate the prediction sample into a bitstream S2540.

In an embodiment, the reference picture list may be configured as a single list based on the first reference picture list of the first prediction direction and the second reference picture list of the second prediction direction.

In an embodiment, based on the prediction mode of the current block being an amvpMerge mode, the reference picture list may be reordered based on at least one of a picture order count (POC) difference value between a current picture and a reference picture, a temporal ID of a reference picture or a quantization parameter.

Meanwhile, a bitstream generated by the above-described image encoding method may be stored in a computer-readable recording medium or transmitted to an image decoding device through a network.

Although the exemplary methods of the present disclosure are expressed as a series of operations for clarity of description, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding device or an image decoding device performing a predetermined operation (step) may perform an operation (a step) for checking a condition or a situation for performing a corresponding operation (step). For example, when it is stated that a predetermined operation is performed when a predetermined condition is satisfied, an image encoding device or an image decoding device may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two.

In addition, the various embodiments of the present disclosure may be implemented by hardware, firmware, software or a combination thereof. For implementation by hardware, they may be implemented by one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), general processors, controllers, microcontrollers, microprocessors, etc.

In addition, an image decoding device and an image encoding device to which an embodiment of the present disclosure is applied may be included in a multimedia broadcasting transmitting and receiving device, a mobile communication terminal, a home cinema video device, a digital cinema video device, a surveillance camera, a video communication device, a real-time communication device such as a video communication, a mobile streaming device, a storage medium, a camcorder, a video-on-demand (VoD) service providing device, an OTT video (Over the top video) device, an Internet streaming service providing device, a three-dimensional (3D) video device, a video phone video device, a medical video device, etc., and may be used to process a video signal or a data signal. For example, an OTT video (Over the top video) device may include a game console, a Blu-ray player, an Internet-connected TV, a home theater system, a smartphone, a tablet PC, a digital video recorder (DVR), etc.

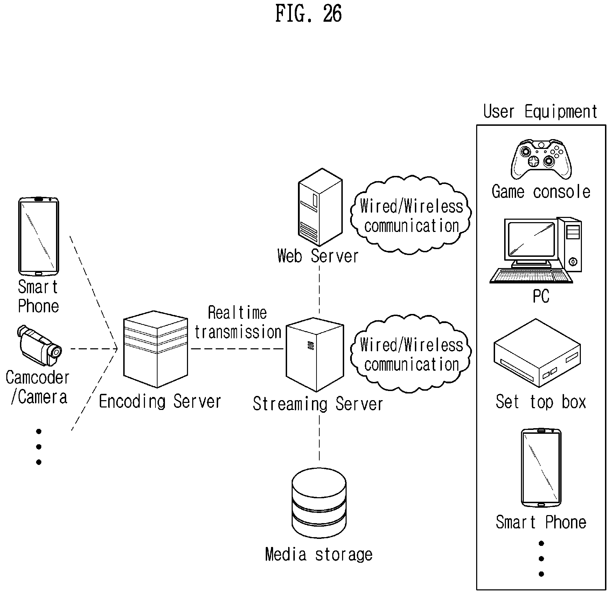

FIG. 26 shows an exemplary diagram of a content streaming system to which an embodiment of the present disclosure may be applied.

As shown in FIG. 26, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1.  An image decoding method performed by an image decoding apparatus, comprising:

    constructing a reference picture list for a current block;
    reordering the reference picture list based on whether a prediction mode of the current block is an amvpMerge mode, wherein the amvpMerge mode is a prediction mode in which an advanced motion vector prediction (AMVP) mode is applied for a first prediction direction of the current block and a merge mode is applied for a second prediction direction; and
    generating a prediction sample of the current block based on the reference picture list,
    wherein based on the prediction mode of the current block being the amvpMerge mode, a template matching-based reordering is not applied to the reference picture list.

2.  The method of Claim 1, wherein the reference picture list is composed of a single list based on a first reference picture list of the first prediction direction and a second reference picture list of the second prediction direction.

3.  The method of Claim 1, wherein based on the prediction mode of the current block being the amvpMerge mode, the reference picture list is reordered based on at least one of a picture order count (POC) difference value between a current picture and a reference picture, a temporal identifier (temporal ID) of the reference picture, or a quantization parameter.

4.  The method of Claim 1, wherein based on the prediction mode of the current block being the amvpMerge mode, a maximum number of motion vector predictor (MVP) candidates for the first prediction direction is determined differently based on whether a template matching-based motion compensation is allowed.

5.  The method of Claim 1, wherein based on the prediction mode of the current block being the amvpMerge mode, a local illumination compensation (LIC) flag representing whether a LIC is applied to the current block is obtained from a bitstream only when a bidirectional prediction is applied to the current block.

6.  The method of Claim 1, wherein based on the prediction mode of the current block being the amvpMerge mode, a maximum number of AMVP candidates for the first prediction direction is determined differently based on whether a reference picture of the current block is resampled.

7. The method of Claim 1, wherein the reordering is performed based on whether each reference picture in the reference picture list is resampled.

8. The method of Claim 7, wherein the reordering is performed by setting a template cost of a resampled reference picture in the reference picture list as a predetermined maximum value.

9. The method of Claim 1, wherein based on the prediction mode of the current block being the amvpMerge mode, a maximum number of AMVP candidates for the first prediction direction is determined differently based on whether the template matching-based reordering is applied to the AMVP candidates.

10. An image decoding apparatus including a memory and at least one processor, wherein the at least one processor:

   constructs a reference picture list for a current block,
   reorders the reference picture list based on whether a prediction mode of the current block is an amvpMerge mode, wherein the amvpMerge mode is a prediction mode in which an advanced motion vector prediction (AMVP) mode is applied for a first prediction direction of the current block and a merge mode is applied for a second prediction direction; and
   generates a prediction sample of the current block based on the reference picture list,
   wherein based on the prediction mode of the current block being the amvpMerge mode, a template matching-based reordering is not applied to the reference picture list

11. An image encoding method performed by an image encoding apparatus, comprising:

   constructing a reference picture list for a current block;
   reordering the reference picture list based on whether a prediction mode of the current block is an amvpMerge mode, wherein the amvpMerge mode is a prediction mode in which an advanced motion vector prediction (AMVP) mode is applied for a first prediction direction of the current block and a merge mode is applied for a second prediction direction;
   generating a prediction sample of the current block based on the reference picture list; and
   encoding a reference picture index representing a reference picture used to generate the prediction sample within a bitstream,
   wherein based on the prediction mode of the current block being the amvpMerge mode, a template matching-based reordering is not applied to the reference picture list.

12. The method of Claim 11, wherein the reference picture list is composed of a single list based on a first reference picture list of the first prediction direction and a second reference picture list of the second prediction direction.

13. The method of Claim 11, wherein based on the prediction mode of the current block being the amvpMerge mode, the reference picture list is reordered based on at least one of a picture order count (POC) difference value between a current picture and a reference picture, a temporal identifier (temporal ID) of the reference picture, or a quantization parameter.

14. A non-transitory computer-readable recording medium storing a bitstream generated by the image encoding method of Claim 11.

15. A method for transmitting a bitstream generated by an image encoding method, the image encoding method comprising:

   constructing a reference picture list for a current block;
   reordering the reference picture list based on whether a prediction mode of the current block is an amvpMerge mode, wherein the amvpMerge mode is a prediction mode in which an advanced motion vector prediction (AMVP) mode is applied for a first prediction direction of the current block and a merge mode is applied for a second prediction direction;
   generating a prediction sample of the current block based on the reference picture list; and
   encoding a reference picture index representing a reference picture used to generate the prediction sample into a bitstream,
wherein based on the prediction mode of the current block being the amvpMerge mode, a template matching-based reordering is not applied to the reference picture list.

FIG.1

```
              10                          20
              ~                           ~

    ┌─────────────────┐       ┌─────────────────┐
    │ ┌─────────────┐ │       │ ┌─────────────┐ │
 11 │ │VIDEO SOURCE │ │       │ │  RENDERER   │ │ 23
    │ │ GENERATOR   │ │       │ └──────▲──────┘ │
    │ └──────┬──────┘ │       │        │        │
    │ ┌──────▼──────┐ │       │ ┌──────┴──────┐ │
 12 │ │  ENCODER    │ │       │ │  DECODER    │ │ 22
    │ └──────┬──────┘ │       │ └──────▲──────┘ │
    │ ┌──────▼──────┐ │       │ ┌──────┴──────┐ │
 13 │ │ TRANSMITTER │─┼───────┼─▶│  RECEIVER   │ │ 21
    │ └─────────────┘ │       │ └─────────────┘ │
    └─────────────────┘       └─────────────────┘
```

# FIG.2

# FIG.3

EP 4 614 979 A1

FIG.4

180

181
PREDICTION MODE
DETERMINER

182
MOTION INFORMATION
DERIVER

183
PREDICTION SAMPLE
DERIVER

INTER PREDICTOR

ORIGINAL PICTURE

REFERENCE PICTURE

PREDICTIOIN MODE INFORMATION
INFORMATION ON MOTION INFORMATION

PREDICTION SAMPLE

# FIG. 5

```
              ( Start )
                  │
                  ▼
┌─────────────────────────────────────────────┐
│  Perform prediction (determine inter          │──S510
│  prediction mode, derive motion information,  │
│  generate prediction samples)                 │
└─────────────────────────────────────────────┘
                  │
                  ▼
┌─────────────────────────────────────────────┐
│  Derive residual samples based on prediction  │──S520
│  samples                                      │
└─────────────────────────────────────────────┘
                  │
                  ▼
┌─────────────────────────────────────────────┐
│  Encode image information including           │──S530
│  prediction information and residual          │
│  information                                  │
└─────────────────────────────────────────────┘
                  │
                  ▼
              (  End  )
```

# FIG. 6

260

261
PREDICTION MODE
DETERMINER

262
MOTION INFORMATION
DERIVER

263
PREDICTION SAMPLE
DERIVER

INTER PREDICTOR

PREDICTIOIN MODE INFORMATION
INFORMATION ON MOTION INFORMATION

REFERENCE PICTURE

PREDICTION SAMPLE

# FIG. 7

```
                    ( Start )
                        │
                        ▼
    ┌─────────────────────────────────────────┐
    │  Determine prediction mode for current block │──S710
    │  based on received prediction information    │
    └─────────────────────────────────────────┘
                        │
                        ▼
    ┌─────────────────────────────────────────┐
    │          Derive motion information           │──S720
    └─────────────────────────────────────────┘
                        │
                        ▼
    ┌─────────────────────────────────────────┐
    │ Perform prediction (generate prediction samples) │──S730
    └─────────────────────────────────────────┘
                        │
                        ▼
    ┌─────────────────────────────────────────┐
    │        Derive residual samples based on       │──S740
    │            residual information               │
    └─────────────────────────────────────────┘
                        │
                        ▼
    ┌─────────────────────────────────────────┐
    │   Reconstruct picture based on prediction    │──S750
    │       samples and residual samples           │
    └─────────────────────────────────────────┘
                        │
                        ▼
                    ( End )
```

FIG. 8

```
                    ( Start )
                        |
                        v
    +-------------------------------------+
    |  Determine inter prediction mode    |--- S810
    +-------------------------------------+
                        |
                        v
    +-------------------------------------+
    |     Derive motion information       |--- S820
    +-------------------------------------+
                        |
                        v
    +-------------------------------------+
    | Perform prediction based on motion  |
    | information (generate prediction    |--- S830
    | sample)                             |
    +-------------------------------------+
                        |
                        v
                    (  End  )
```

FIG. 9

refPic in List L0   Current Picture   refPic in List L1

FIG. 10

# FIG. 11

```
            ( Parsing process )
                    │
                    ▼
        ┌──────────────────────────┐
        │   Parse amvpMerge flag   │──── S1110
        └──────────────────────────┘
                    │
                    ▼
              ╱───────────╲
      no    ╱  amvpMerge   ╲    yes
   ◄───────┤     flag       ├────────►  ─── S1120
  S1130     ╲             ╱      S1140
             ╲───────────╱
  ┌───────────────────────┐   ┌───────────────────────┐
  │ single reference      │   │ single reference      │
  │ picture list          │   │ picture list          │
  │ configuration process │   │ configuration process │
  │ for AMVP mode other   │   │ for amvpMerge         │
  │ than amvpMerge        │   │                       │
  └───────────────────────┘   └───────────────────────┘
             │                           │
             └─────────────┬─────────────┘
                           ▼
              ┌───────────────────────┐
              │ Reference picture index│──── S1150
              └───────────────────────┘
                           ┊
                           ┊
                   ( Parsing process end )

                   ( Decoding process )
                           │
                           ▼
                     ╱───────────╲
                    ╱  amvpMerge   ╲
          no       ┤     flag       ├──── S1160
      ◄────────────┤                │
     S1170          ╲             ╱   yes
                     ╲───────────╱
  ┌───────────────────────┐              │
  │ single reference      │              │
  │ picture list          │              │
  │ reordering process    │              │
  │ for AMVP mode other   │              │
  │ than amvpMerge -      │              │
  │ Template matching based│             │
  └───────────────────────┘              │
             │                           │
             └─────────────┬─────────────┘
                           ▼
                 ( Decoding process end )
```

FIG. 12

FIG. 13

# FIG. 14

```
                        ( Parsing process )
                                |
                                v
                    ┌───────────────────────┐
                    │   Parse amvpMerge flag │───S1410
                    └───────────────────────┘
                                |
                                v
                          <amvpMerge flag>───S1420
                   no  /               \  yes
      S1430          /                   \          S1440
        )          /                       \          )
   ┌────────────────────────┐       ┌────────────────────────┐
   │  single reference picture list │   │  single reference picture list │
   │  configuration process for AMVP│   │  configuration process for amvpMerge│
   │  mode other than amvpMerge     │   └────────────────────────┘
   └────────────────────────┘                     |
             |                           S1450     v
             |                             )  ┌────────────────────────┐
             |                                │  single reference picture list │
             |                                │  reordering process for amvpMerge –│
             |                                │  POC based / TID based / QP based, etc│
             |                                └────────────────────────┘
             |                                          |
             └──────────────────┬───────────────────────┘
                                v
                    ┌───────────────────────┐
                    │  Reference picture index │───S1460
                    └───────────────────────┘
                                :
                                :
                                |
                                v
                      ( Parsing process end )
                                |
                                v
                      ( Decoding process )
                                |
                                v
                          <amvpMerge flag>───S1470
                 no  /                 \  yes
    S1480          /                     \
      )           v
 ┌────────────────────────┐
 │  single reference picture list │
 │  reordering process for AMVP mode other│
 │  than amvpMerge – Template matching based│
 └────────────────────────┘
             |                           |
             └──────────────┬────────────┘
                            v
                  ( Decoding process end )
```

FIG. 15

| Unite list | 0 | 4 | 8 | 32 | 16 | 2 |
|---|---|---|---|---|---|---|

| 1 |
|---|

curPic

| 0 | 2 | 4 | 8 | 16 | 32 |
|---|---|---|---|---|---|

POC based reordering

FIG. 16

## FIG. 17

TID:0 TID:4 TID:3 TID:1 TID:2 TID:5

Unite list | 0 | 4 | 8 | 32 | 16 | 2 |

| 1 | | 0 | 32 | 16 | 8 | 4 | 2 |

curPic     Temporal ID based reordering

FIG. 18

Parsing process

Parse amvpMerge flag —— S1810

Reference picture index —— S1820

amvpMerge flag —— S1830

yes          no

Cond* —— S1840

S1850          yes          no          S1855          S1870

Case1:first predefined number of max candidate index

Case2:second predefined number of max candidate index

predefined number of max candidate index for regular AMVP

S1880

S1860 —— Parse amvpMerge_mvp_index[][]

Parse mvp_index_LX[][]

End

FIG. 19

Parsing process

Parse amvpMerge flag —S1910

amvpMerge —S1920

yes

no

LIC flag signaling condition? —S1930

no

yes

LIC flag —S1940

End

## FIG. 20

Start

Parse AllowUnitedRefPicList? — S2010

S2020

AllowUnitedRefPicList? — yes

no

S2030

single reference picture list configuration process

S2040

Picture reordering process within single reference pictures list

S2050

Parse amvpMergeFlag

Parse amvpMerge reference index (refIdxAmvpMerge) — S2060

S2070

yes — amvpMergeflag==1 — no

Reference Picture (refIdxAmvpMerge)==RPR? — S2080

yes — no

S2090

Parse mvp idx(binarized with max candidates M)

S2095

Parse mvp idx(binarized with max candidates N)

Decoding process end

# FIG. 21

Start

Y = 0 —— S2111

S2112

Y < number of
L0 reference pictures

no

yes

S2113

Add L0-idxY to unitedRefList

Y++

Y = 0 —— S2121

S2122

Y < number of
L1 reference pictures

no

yes

S2123

L1-IdxY is not in
the unitedRefList

no

yes

S2124

Add L1-idxY to unitedRefList

Y++

S2131

RPR(LX-idxY) == 1

yes          no

S2132              S2133

Cost = Max        Cost = 0

S2134

Order unitedRefList in Cost based ascending order

End

## FIG. 22

```
                        ┌─────────┐
                        │  Start  │
                        └────┬────┘
                             │
                             ▼
              ┌──────────────────────────────┐
              │ Parse AllowUnitedRefPicList?  │──S2210
              └──────────────┬───────────────┘
                             │            S2220
                             ▼
              ◇─────────────────────────◇  yes
              ◇  AllowUnitedRefPicList?  ◇──────────┐
              ◇─────────────────────────◇          │         S2230
                             │ no                   ▼
                             │          ┌──────────────────────────┐
                             │          │   single reference       │
                             │          │ picture list             │
                             │          │ configuration process    │
                             │          └────────────┬─────────────┘
                             │                       │        S2240
                             │                       ▼
                             │          ┌──────────────────────────────┐
                             │          │ Picture reordering process   │
                  S2250      │          │ within single reference      │
                             │          │ pictures list                │
                             ▼          └────────────┬─────────────────┘
              ┌──────────────────────────┐           │
              │    Parse amvpMergeFlag    │◄──────────┘
              └──────────────┬───────────┘
                             │
                             ▼
              ┌──────────────────────────────┐
              │ Parse amvpMerge reference     │──S2260
              │ index (refIdxAmvpMerge)       │
              └──────────────┬───────────────┘
                             │            S2270
       yes                   ▼                    no
        ┌────────◇─────────────────────◇──────────────────────┐
        │        ◇   amvpMergeflag==1   ◇                      │
        │        ◇─────────────────────◇                       │
        ▼              S2280                                   │
    ◇───────────────────────◇   no                            │
    ◇   Apply TM-based AMVP  ◇───────────────┐                │
    ◇   candidate reordering?◇               │                │
    ◇───────────────────────◇                │                │
        │ yes                                 │                │
        ▼                                     │                │
    ◇───────────────────────◇                 │                │
    ◇  Reference Picture     ◇──S2282         │                │
    ◇ (refIdxAmvpMerge)==RPR?◇                │                │
    ◇───────────────────────◇                 │                │
     yes      │      no                       │                │
 S2290 ▼             ▼ S2292                   ▼ S2294          │
┌──────────────┐ ┌──────────────┐  ┌──────────────┐            │
│Parse mvp idx │ │Parse mvp idx │  │Parse mvp idx │            │
│(binarized    │ │(binarized    │  │(binarized    │            │
│with max      │ │with max      │  │with max      │            │
│candidates M) │ │candidates N) │  │candidates Q) │            │
└──────┬───────┘ └──────┬───────┘  └──────┬───────┘            │
       │                │                 │                    │
       └────────────────┴─────────────────┴────────────────────┘
                             │
                             ▼
                  ┌────────────────────────┐
                  │  Decoding process end  │
                  └────────────────────────┘
```

## FIG. 23

## FIG. 24

```
            ( Start )
                |
                v
+--------------------------------+
| Configure reference picture list|-----S2410
+--------------------------------+
                |
                v
+--------------------------------+
|   Reorder reference picture list|
| based on whether prediction mode of|----S2420
|  current block is amvpMerge mode|
+--------------------------------+
                |
                v
+--------------------------------+
|   Generate prediction sample of|
| current block based on reference|----S2430
|  picture list (Inter prediction)|
+--------------------------------+
                |
                v
            ( End )
```

## FIG. 25

Start

Configure reference picture list ⎯ S2510

Reorder reference picture list based on whether prediction mode of current block is amvpMerge mode ⎯ S2520

Generate prediction sample of current block based on reference picture list (Inter prediction) ⎯ S2530

Encode reference picture index ⎯ S2540

End

FIG. 26

## INTERNATIONAL SEARCH REPORT

International application No.

**PCT/KR2023/017615**

| A. | CLASSIFICATION OF SUBJECT MATTER |
|---|---|

**H04N 19/70**(2014.01)i; **H04N 19/105**(2014.01)i; **H04N 19/513**(2014.01)i; **H04N 19/132**(2014.01)i

According to International Patent Classification (IPC) or to both national classification and IPC

| B. | FIELDS SEARCHED |
|---|---|

Minimum documentation searched (classification system followed by classification symbols)

H04N 19/70(2014.01); H04N 19/00(2014.01); H04N 19/176(2014.01); H04N 19/50(2014.01); H04N 19/503(2014.01); H04N 19/52(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), amvpMerge, 예측(predict), 참조 픽처(reference picture), 목록(list), 재정렬(reordering)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-1633165 B1 (QUALCOMM INCORPORATED) 23 June 2016 (2016-06-23)<br>See paragraphs [0014], [0047], [0057], [0062]-[0069], [0076], [0082], [0148], [0157], [0168], [0170] and [0196]; and figure 4. | 1-15 |
| Y | JANG, Hyeongmun et al. Non-EE2 : amvpMerge for low delay. JVET-AA0069-v4, Joint Video Experts Team (JVET) of ITU-T SG 16 WP 3 and ISO/IEC JTC 1/SC 29, 27th Meeting, by teleconference. pp. 1-3, 21 July 2022.<br>See pages 1-2. | 1-15 |
| Y | US 2022-0038739 A1 (TENCENT AMERICA LLC) 03 February 2022 (2022-02-03)<br>See paragraphs [0129]-[0130]. | 4,6,9 |
| Y | US 2021-0235110 A1 (BEIJING BYTEDANCE NETWORK TECHNOLOGY CO., LTD. et al.) 29 July 2021 (2021-07-29)<br>See claims 1-2. | 5 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 February 2024** | **14 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/017615** |

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-1954465 B1 (SUN PATENT TRUST) 05 March 2019 (2019-03-05) <br> See claims 6-9. | 1-15 |

Form PCT/ISA/210 (second sheet) (July 2022)

| INTERNATIONAL SEARCH REPORT | | | International application No. | |
|---|---|---|---|---|
| Information on patent family members | | | **PCT/KR2023/017615** | |

| Patent document cited in search report | | | Publication date (day/month/year) | Patent family member(s) | | | Publication date (day/month/year) |
|---|---|---|---|---|---|---|---|
| KR | 10-1633165 | B1 | 23 June 2016 | CN | 103460698 | A | 18 December 2013 |
| | | | | EP | 2692137 | A1 | 05 February 2014 |
| | | | | JP | 2014-515217 | A | 26 June 2014 |
| | | | | JP | 6017533 | B2 | 02 November 2016 |
| | | | | KR | 10-2013-0135381 | A | 10 December 2013 |
| | | | | US | 2015-0092839 | A1 | 02 April 2015 |
| | | | | US | 9402080 | B2 | 26 July 2016 |
| | | | | WO | 2012-134956 | A1 | 04 October 2012 |
| US | 2022-0038739 | A1 | 03 February 2022 | CN | 113632465 | A | 09 November 2021 |
| | | | | EP | 3791579 | A1 | 17 March 2021 |
| | | | | JP | 2023-065561 | A | 12 May 2023 |
| | | | | JP | 7238150 | B2 | 13 March 2023 |
| | | | | KR | 10-2021-0118178 | A | 29 September 2021 |
| | | | | US | 11722695 | B2 | 08 August 2023 |
| | | | | US | 2023-0262261 | A1 | 17 August 2023 |
| | | | | WO | 2021-006986 | A1 | 14 January 2021 |
| US | 2021-0235110 | A1 | 29 July 2021 | CN | 113287317 | A | 20 August 2021 |
| | | | | CN | 113287317 | B | 28 April 2023 |
| | | | | US | 11758124 | B2 | 12 September 2023 |
| | | | | US | 2023-0388488 | A1 | 30 November 2023 |
| | | | | WO | 2020-084509 | A1 | 30 April 2020 |
| KR | 10-1954465 | B1 | 05 March 2019 | CN | 107426575 | A | 01 December 2017 |
| | | | | CN | 107426575 | B | 19 February 2021 |
| | | | | EP | 2677751 | A1 | 25 December 2013 |
| | | | | EP | 2677751 | B1 | 31 March 2021 |
| | | | | JP | 2019-022227 | A | 07 February 2019 |
| | | | | JP | 6422036 | B2 | 14 November 2018 |
| | | | | KR | 10-2019-0022916 | A | 06 March 2019 |
| | | | | US | 11818391 | B2 | 14 November 2023 |
| | | | | US | 2022-0264145 | A1 | 18 August 2022 |
| | | | | US | 9961362 | B2 | 01 May 2018 |
| | | | | WO | 2012-111331 | A1 | 23 August 2012 |

Form PCT/ISA/210 (patent family annex) (July 2022)